# EUROPÄISCHE PATENTANMELDUNG

(11) **EP 4 488 445 A1**
(43) Veröffentlichungstag der Anmeldung: **08.01.2025**
(21) Anmeldenummer: 24184104.8
(22) Anmeldetag: 24.06.2024
(51) Int. Cl.: E01C 19/48, B60K 35/10, B60R 11/02

(54) **SELBSTFAHRENDE BODENBEARBEITUNGSMASCHINE MIT WENIGSTENS EINEM VARIABEL ANORDENBAREN BEDIENMODUL**

(30) Priorität: 03.07.2023 DE 102023117547
(71) Anmelder: Wirtgen GmbH, 53578 Windhagen (DE)
(72) Erfinder: Schwarz, Michael, 53604 Bad Honnef (DE)
(74) Vertreter: Ruttensperger Lachnit Trossin Gomoll

(57) **Zusammenfassung**

Eine selbstfahrende Bodenbearbeitungsmaschine (10) umfasst einen Maschinenrahmen (12), ein den Maschinenrahmen (12) tragendes Fahrwerk (14), einen Fahrantrieb (24) und eine zur Bodenbearbeitung ausgebildete Bodenbearbeitungsvorrichtung (28), wobei die Bodenbearbeitungsmaschine (10) eine Steuervorrichtung (40) zur Steuerung eines Betriebs der Bodenbearbeitungsmaschine (10) aufweist, wobei die Steuervorrichtung (40) ein Bedienmodul (46, 48) mit einer Mehrzahl von selektiv betätigbaren Bedienelementen (49a, 49b, 49c) aufweist, deren Betätigung geeignet ist, einen Betriebszustand der Bodenbearbeitungsmaschine (10) zu ändern, wobei die Steuervorrichtung (40) ein wenigstens zweiteiliges Gehäuse (42, 44) aufweist, in welchem das Bedienmodul (46, 48) aufgenommen ist, wobei das Gehäuse (42, 44) eine Unterschale (52) und eine Oberschale (54) aufweist, welche relativ zueinander zwischen einer Schließstellung und einer Offenstellung bewegbar sind, wobei die Bedienelemente (49a, 49b, 49c) des im Gehäuse aufgenommenen Bedienmoduls (46, 48) in der Offenstellung des Gehäuses (42, 44) zugänglich sind, Erfindungsgemäß ist vorgesehen, dass das Bedienmodul (46, 48) vom Gehäuse (42, 44) trennbar und am Gehäuse (42, 44) anordenbar ist, wobei das Bedienmodul (46, 48) an jeder Schale (52, 54) aus Oberschale (54) und Unterschale (52) funktionsbereit anordenbar ist.

## Beschreibung

Die vorliegende Erfindung betrifft eine selbstfahrende Bodenbearbeitungsmaschine, umfassend einen Maschinenrahmen, ein den Maschinenrahmen tragendes Fahrwerk, einen Fahrantrieb und eine zur Bodenbearbeitung ausgebildete Bodenbearbeitungsvorrichtung, wobei die Bodenbearbeitungsmaschine eine Steuervorrichtung zur Steuerung eines Betriebs der Bodenbearbeitungsmaschine aufweist, wobei die Steuervorrichtung ein Bedienmodul mit einer Mehrzahl von selektiv betätigbaren Bedienelementen aufweist, deren Betätigung geeignet ist, einen Betriebszustand der Bodenbearbeitungsmaschine zu ändern, wobei die Steuervorrichtung ein wenigstens zweiteiliges Gehäuse aufweist, in welchem das Bedienmodul aufgenommen ist, wobei das Gehäuse eine Unterschale und eine Oberschale aufweist, welche relativ zueinander zwischen einer Schließstellung und einer Offenstellung bewegbar sind, wobei die Bedienelemente des im Gehäuse aufgenommenen Bedienmoduls in der Offenstellung des Gehäuses zugänglich sind. Das Gehäuse und das wenigstens eine Bedienmodul bilden zusammen eine Bedienvorrichtung.

Die Bedienelemente sind in der Offenstellung des Gehäuses in größerem Umfang zugänglich als in dessen Schließstellung. Dies kann dadurch realisiert sein, dass in der Offenstellung des Gehäuses mehr Bedienelemente zugänglich sind als in dessen Schließstellung oder/und dass in der Offenstellung des Gehäuses Bedienelemente mit geringerem Zugangsaufwand zugänglich sind als in dessen Schließstellung. Bevorzugt ist ein Großteil der Bedienelemente, besonders bevorzugt sind alle Bedienelemente, in der Schließstellung des Gehäuses nicht zugänglich.

Eine solche Bodenbearbeitungsmaschine ist beispielsweise aus der EP 3 524 461 A1 bekannt. Dort sind beispielhaft eine Straßenfräse, ein Recycler und ein Surface-Miner als mögliche Bodenbearbeitungsmaschinen genannt. Die Oberschale und die Unterschale verbergen in der Schließstellung das im Gehäuse aufgenommene Bedienmodul vollständig, um es vor Vandalismusangriffen zu schützen. Zu solchen Vandalismusattacken kommt es bisweilen, wenn die Bodenbearbeitungsmaschine über Nacht auf einer Baustelle abgestellt ist und sich Personen mit Zerstörungsabsicht Zugang zur Baustelle verschaffen.

An der bekannten Bedienvorrichtung aus Gehäuse und Bedienmodul ist das Bedienmodul fest in der Unterschale verankert und kann von der Oberschale in der Schließstellung vollständig abgedeckt sein. In der Offenstellung ist die Oberschale von der Unterschale der bekannten Bedienvorrichtung vollständig gelöst, abgehoben und kann fern von der Unterschale für die Dauer des Betriebs der Bodenbearbeitungsmaschine verstaut sein. Die bekannte Oberschale hat eine im Wesentlichen ebene Plattengestalt mit einigen wenigen versteifenden Sicken.

Ausgehend von diesem Stand der Technik ist es Aufgabe der vorliegenden Erfindung, eine Bedienvorrichtung aus Gehäuse und Bedienmodul bei in Zeiten des Nicht-Gebrauchs der Bodenbearbeitungsmaschine nach wie vor aufrechterhaltenem Vandalismusschutz mit verbesserter Anpassbarkeit an unterschiedliche Betriebssituationen während des Betriebs der Bodenbearbeitungsmaschine bereitzustellen, um den an der Bodenbearbeitungsmaschine arbeitenden Maschinenführer noch besser in seiner Tätigkeit zu unterstützen.

Aus der US 2015/0321597 A1 ist eine kabellose Bedienvorrichtung für Komponenten eines Fahrzeugs bekannt, deren tragbares Gehäuse eine Unterschale und eine Oberschale und ein darin gewünschtenfalls entfernbar angeordnetes Bedienmodul aufweist. Das Bedienmodul ist nur mit der Unterschale verbindbar. Die Oberschale ist schwenkbar mit der Unterschale verbunden. Durch eine gesonderte Halterung kann die bekannte Bedienvorrichtung am Gürtel des Maschinenführers oder im Führerhaus des Fahrzeugs angeordnet sein.

Aus der US 7,953,517 B1 und der US 10,069,284 B1 ist jeweils ein Bediengerät zur Steuerung von Bewässerungsanlagen bekannt. Jedes Bediengerät ist in einem Kunststoffgehäuse mit Unterschale und schwenkbar daran festgelegter Oberschale aufgenommen. Das Bediengerät selbst ist relativ zum Gehäuse schwenkbar mit dem Gehäuse verbunden. Die Schwenkachsen der Gehäuseschalen einerseits und des Bediengeräts andererseits sind zueinander parallel oder kollinear.

Die oben genannte Aufgabe wird gemäß der vorliegenden Erfindung gelöst durch eine eingangs genannte selbstfahrende Bodenbearbeitungsmaschine, bei welcher das Bedienmodul vom Gehäuse trennbar und am Gehäuse anordenbar ist, wobei das Bedienmodul an jeder Schale aus Oberschale und Unterschale funktionsbereit anordenbar ist.

"Funktionsbereit" bedeutet dabei, dass im betriebsbereiten Zustand der Bodenbearbeitungsmaschine mit eingeschaltetem Bedienmodul die Bedienelemente für einen die Bodenbearbeitungsmaschine steuernden Maschinenführer bestimmungsgemäß zugänglich sind. Wenigstens ein Teil der Bedienelemente, vorzugsweise alle Bedienelemente des Bedienmoduls sind derart signalübertragungsmäßig mit einer Datenverarbeitungsanlage der Steuervorrichtung verbunden, dass ihre Betätigung in vorhersehbarer Weise zu Zustandsänderungen von Funktionsvorrichtungen der Bodenbearbeitungsmaschine führt. So können Betätigungen von Bedienelementen des Bedienmoduls unterschiedliche Aktuatoren der Bodenbearbeitungsmaschine ansteuern, um beispielsweise die Bodenbearbeitungsmaschine mittels des Fahrantriebs zu bewegen oder/und um während der Bewegung durch Lenkung des Fahrwerks die Bewegungsrichtung der Bodenbearbeitungsmaschine zu ändern oder/und um einen Betrieb der Bodenbearbeitungsvorrichtung zu steuern, um nur einige Beispiele zu nennen.

Wenngleich das Bedienmodul auch ausgeschaltet in einer der beiden Schalen aufgenommen sein kann und in der Regel sein wird, dient das Gehäuse nicht lediglich dem Transport des Bedienmoduls zwischen einem Verstauungsort und einem Einsatzort. Vielmehr dient das Gehäuse einer sicheren Verankerung des Bedienmoduls in einem Arbeitsbereich eines Maschinenführers der Bodenbearbeitungsmaschine im funktionsbereiten Zustand und vorzugsweise auch in einem Ruhezustand, in welchem die Bodenbearbeitungsmaschine ausgeschaltet stillsteht.

Je nach Art und Umfang der Bodenbearbeitung, welche die Bodenbearbeitungsmaschine aufgrund der an ihr angeordneten Bodenbearbeitungsvorrichtung auszuführen imstande ist, kann die Bedienvorrichtung aus Gehäuse und Bedienmodul an unterschiedlichen Stellen der Bodenbearbeitungsmaschine angeordnet sein. Vorzugsweise weist die Bodenbearbeitungsmaschine einen Bedienstand auf, auf welchem sich der Maschinenführer wenigstens während des Betriebs der Bodenbearbeitungsmaschine zu deren Steuerung aufhält. Bevorzugt ist daher die Bedienvorrichtung an einem Bedienstand angeordnet, besonders bevorzugt in Reichweite einer erwachsenen Person um einen etwaig vorgesehenen Bediensitz oder/und in Reichweite einer erwachsenen auf einem Bedienstandboden stehenden Person.

Bevorzugt ist das Bedienmodul derart in einer Schale aus Oberschale und Unterschale angeordnet, dass das Bedienmodul mit der Schale körperlich verbunden und an der Schale gehalten ist.

Das Gehäuse weist bevorzugt ein Gehäusevolumen auf, in welchem das Bedienmodul bei bestimmungsgemäßer Anordnung in einer Schale aufgenommen ist, wobei das Gehäusevolumen in der Schließstellung vom Gehäuse umschlossen ist. So kann das Gehäuse das Bedienmodul im Schließzustand vor einem Zugriff von außen schützen. Eine Ausnahme der umschlossenen Einhüllung des Gehäusevolumens durch das Gehäuse können Durchgangsöffnungen bilden, welche am Gehäuse vorgesehen sein können, um Verbindungsleitungen zur Übertragung von Signalen oder/und Energie zwischen einer Komponente der Bodenbearbeitungsmaschine und dem Bedienmodul zu ermöglichen.

Durch die grundsätzliche Anordenbarkeit des Bedienmoduls in jeder Schale aus der Oberschale und der Unterschale stehen grundsätzlich zwei verschiedene Anordnungsorte für die Anordnung des Bedienmoduls bereit. Abhängig davon, wo sich der Maschinenführer während der Bodenbearbeitung oder auch während nur eines Fahrbetriebs der Bodenbearbeitungsmaschine aufhält, kann er das Bedienmodul funktionsbereit in der seinem Aufenthaltsort jeweils nähergelegenen Schale aus Oberschale und Unterschale anordnen und kann so für die Steuerung des Betriebs der Bodenbearbeitungsmaschine an seinem Aufenthaltsort bleiben oder muss diesen nur geringfügig oder/und kurzfristig verlassen.

Zum Schutz des Bedienmoduls ohne Erfordernis, dieses nach Ende einer Arbeitsschicht und nach Ausschalten der Bodenbearbeitungsmaschine verlagern zu müssen, ist bevorzugt vorgesehen, dass das Bedienmodul an einer jeweiligen Innenseite der Oberschale oder der Unterschale anordenbar ist bzw. wenigstens während eines Betriebs der Bodenbearbeitungsmaschine angeordnet ist. Dann kann unabhängig davon, ob das Bedienmodul aktuell in der Oberschale oder in der Unterschale angeordnet ist, durch Verbringen des Gehäuses in seine Schließstellung das Bedienmodul vor einem unerwünschten Zugriff von außen geschützt im Gehäuse verbleiben.

Bevorzugt ist das Bedienmodul nur jeweils an der Innenseite der Oberschale und an der Innenseite der Unterschale anordenbar bzw. ist an der Innenseite der jeweils zur Anordnung ausgewählten Schale von Oberschale und Unterschale angeordnet.

Zur Vermeidung von Zweifeln sei klargestellt, dass die Innenseiten von Oberschale und Unterschale jene Seiten der benannten Schalen sind, welche in der Schließstellung des Gehäuses einander gegenüberliegen oder/und aufeinander zuweisen.

Um zu ermöglichen, dass jede der zur Aufnahme des Bedienmoduls ausgebildeten Schalen aus Oberschale und Unterschale nicht nur das Bedienmodul an sich halten können, sondern dieses auch an jenen Seiten umgeben und abschirmen können, an welchen kein Bedienzugriff durch den Maschinenführer erfolgen muss, ist gemäß einer bevorzugten Weiterbildung der vorliegenden Erfindung vorgesehen, dass jede Schale aus Oberschale und Unterschale je eine zur Aufnahme des Bedienmoduls ausgebildete konkave Innenseite aufweist. Die Innenseiten von Oberschale und Unterschale sind jeweils zur Aufnahme des Bedienmoduls ausgebildet.

Zur erleichterten irrtumsminimierten Anordnung des Bedienmoduls in einer der Schalen aus Oberschale und Unterschale sind bevorzugt Innenseiten der Oberschale und der Unterschale einerseits sowie die im betriebsbereiten Zustand der jeweiligen Schaleninnenseite gegenüberliegenden Außenseite des Bedienmoduls komplementär ausgebildet. Eine vorteilhaft kurze Rüstzeit der Bedienvorrichtung kann unter Ausnutzung einer Selbstzentrierwirkung des Bedienmoduls in der zur Anordnung ausgewählten Schale dann erreicht werden, wenn sich die Schaleninnenseite vom einem Schalenrand zu einem Schalenboden verjüngt, d. h. eine von der jeweiligen Schaleninnenseite eingefasste lichte Fläche verkleinert sich bei Annäherung von dem Schalenrand zum Schalenboden.

Der Schalenrand ist dabei jener Rand der Oberschale und der Unterschale, welcher die Öffnungsfläche der jeweiligen Schale nach radial außen begrenzt, durch die hindurch das Bedienmodul in die jeweilige Schale eingelegt wird. In der Schließstellung des Gehäuses sind die Ränder der Oberschale und der Unterschale einander angenähert. Sie überlappen sich bevorzugt in ihrer Annäherungsrichtung, um ein Aufhebeln des Gehäuses aus der Schließstellung durch einen Werkzeugangriff in einem zwischen Oberschale und Unterschale gebildeten Spalt zu erschweren.

Bevorzugt verjüngt sich der im funktionsbereiten Zustand des Bedienmoduls von der Oberschale oder der Unterschale umgebene Abschnitt der Bedienmodulaußenseite komplementär ausgehend von einem die Bedienelemente tragenden Bedienfeld zu einem mit Abstand von dem Bedienfeld gelegenen Bedienmodulboden. Bevorzugt liegen wenigstens Abschnitte der Bedienmodulaußenseite und der Innenseite der das Bedienmodul aufnehmenden Schale im funktionsbereit in der jeweiligen Schale aufgenommenen Zustand des Bedienmoduls aneinander an. Hierdurch kann die oben genannte bevorzugte Zentrierwirkung gefördert werden.

Grundsätzlich kann der Schalenrand eine beliebige Gestalt aufweisen. Fertigungstechnisch vorteilhaft bei gleichzeitig guter Bauraumausnutzung hat der Schalenrand jeder Schale bevorzugt eine polygonale, vorzugsweise grob rechteckige oder rechteckige Gestalt mit bevorzugt wenigstens, besonders bevorzugt genau, vier geraden Randabschnitten, von welchen jeweils zwei paarweise zueinander parallel verlaufen. Wie es für Rechteckgestalten typisch ist, schließen die unterschiedlichen Paare paralleler Randabschnitte miteinander einen rechten Winkel ein. Zur Vermeidung von Verletzungen weist besonders bevorzugt die Gestalt des Schalenrandes abgerundete oder abgeschrägte Ecken auf. Dies ist mit "grob rechteckig" gemeint.

Die Schalenränder von Oberschale und Unterschale sind bevorzugt komplementär ausgebildet, sodass das Gehäuse in der Schließstellung das Gehäusevolumen sicher umschließt und gegenüber der Außenumgebung abschirmt. Bevorzugt sind die jeweiligen Schalenränder der Oberschale oder/und der Unterschale im Wesentlichen eben. Die Schalenränder von Oberschale und Unterschale sind bevorzugt zu wenigstens 75 % ihrer Umfangslänge eben. Abweichungen können sich beispielsweise durch die bevorzugte Ausbildung oder Anordnung eines Scharniers ergeben, welches die Oberschale und die Unterschale relativ zueinander schwenkbar verbindet. Für die Bildung eines mechanisch besonders stabilen Scharniers können an der Oberschale und an der Unterschale jeweils mit Abstand voneinander angeordnete Vorsprünge zinnenartig angeordnet sein, wobei die Vorsprünge von Oberschale und Unterschale längs ihrer Abstandsrichtung relativ zueinander versetzt angeordnet sind, sodass die Vorsprünge von Oberschale und Unterschale bei ausgebildetem Scharnier in kämmendem Formschlusseingriff miteinander stehen. Ein längs der Abstandsrichtung der Vorsprünge von Oberschale und Unterschale verlaufender Metallstab kann dann eine stabile Scharnierachse des Scharniers bilden.

Die Oberschale oder/und die Unterschale können mit vorteilhafter konstruktiver Freiheit im Spritzgussverfahren hergestellt sein, beispielsweise aus geschäumtem Polyurethan oder aus einem wegen seiner hohen Schlagfestigkeit geschätzten StyrolCopolymerisat, wie etwa ein Acrylnitril-Butadien-Styrol-Copolymer (ABS) oder ein Blend aus einem solchen ABS-Copolymer mit einem weiteren Kunststoff, wie etwa Polyamid oder Polycarbonat. Der Kunststoff zur Bildung der Oberschale oder/und der Unterschale kann zur Erhöhung seiner Festigkeit mit Partikeln oder/und Fasern, insbesondere Glasfasern, gefüllt sein.

Die Innenseite der Oberschale oder/und der Unterschale kann zur Erleichterung der Anordnung der jeweiligen Schale auf einem flachen Untergrund einen überwiegend ebenen Schalenboden aufweisen. Dies bedeutet im Zweifel, dass ein Flächenanteil der Innenfläche oder/und der Außenfläche des Schalenbodens eben ausgebildet ist. So kann der ebene Außenflächenanteil des Schalenbodens als Auflagefläche der Schale auf einem Untergrund dienen. Zusätzlich oder alternativ kann der ebene Innenflächenanteil des Schalenbodens als Auflagefläche zur Auflage eines Bedienmodulbodens dienen. Bevorzugt ist der überwiegend ebene Schalenboden relativ zum im Wesentlichen ebenen Schalenrand um eine Neigeachse geneigt. Dadurch kann eine Seitenwand, etwa eine im funktionsbereiten Zustand des Bedienmoduls vom Maschinenführer ferner gelegene Seitenwand das Bedienfeld des Bedienmoduls weiter überragen als eine der ferner gelegenen Seitenwand gegenüberliegende, dem Maschinenführer näher gelegene Seitenwand. Hierdurch kann ein gewisser Blendschutz des Bedienfelds und seiner Beschriftung bzw. Anzeigeflächen erreicht werden.

Alternativ oder zusätzlich kann durch die beschriebene Neigung von Schalenrand und Schalenboden das Bedienfeld stärker zu dem Maschinenführer hin geneigt vollständig in der Schale aufgenommen sein als es der Neigung der das Gehäuse aufnehmenden Trägerfläche am Bedienstand oder an einem anderen Ort der Bodenbearbeitungsmaschine entspricht. Hierdurch kann die Zugänglichkeit der Bedienfläche für den Maschinenführer in der Offenstellung des Gehäuses erleichtert werden. Bevorzugt ist das Bedienmodul funktionsbereit zwischen der ferner gelegenen Seitenwand und der näher gelegenen Seitenwand angeordnet.

Zur Erzielung der oben als vorteilhaft begründeten Selbstzentrierwirkung kann in einer bevorzugten Weiterbildung der vorliegenden Erfindung die Fläche des Schalenbodens kleiner als eine vom Schalenrand eingefasste Öffnungsfläche sein. Dennoch kann aufgrund der bevorzugt überwiegend ebenen Ausbildung des Schalenbodens für eine sicherere Auflage der Schale auf einen tragenden Untergrund und für eine sicherere Befestigung der Schale auf dem tragenden Untergrund gesorgt sein.

Vom Schalenrand zum Schalenboden verlaufende Seitenwände sind zur Bereitstellung der Konkavität der Innenseite der Oberschale und der Unterschale bezüglich einer Mittelsenkrechten auf eine vom Schalenrand umgebenen Öffnungsfläche oder/und bezüglich einer Mittelsenkrechten auf die Fläche des Schalenbodens geneigt. Bevorzugt sind einander bezüglich wenigstens einer der genannten mittelsenkrechten gegenüberliegende Seitenwände von Oberschale und Unterschale ebenso wie zwischen Bedienfeld und Bedienmodulboden verlaufende Außenwände des Bedienmoduls in Richtung zum jeweiligen Boden hin aufeinander zu geneigt.

Die Neigung der Seitenwände oder/und der Außenwände kann sich im Verlauf zum jeweiligen Boden hin einmal oder mehrfach ändern, sodass Seitenwände oder/und Außenwände wenigstens abschnittsweise um Krümmungsachsen gekrümmt oder um Knickachsen geknickt ausgebildet sein können, wobei die Krümmungsachsen bzw. Knickachsen beispielsweise parallel oder geneigt zum jeweiligen Boden des betrachteten Bauteils aus Oberschale bzw. Unterschale einerseits und Bedienmodul andererseits oder/und parallel zu einem Rand der jeweiligen Schale einerseits und dem Bedienfeld andererseits verlaufen können.

Grundsätzlich soll nicht ausgeschlossen sein, dass die Oberschale des Gehäuses von der Unterschale vollständig abgehoben und entfernt von der Unterschale auf einem hierfür vorbereiteten Untergrund einer mit dem Maschinenrahmen verbundenen Trägerfläche bestimmungsgemäß lösbar angeordnet und verankert werden kann. Bevorzugt ist die Oberschale verliersicher dauerhaft mit der Unterschale verbunden. In Weiterführung dieser bevorzugten Ausführungsform sind die Oberschale und die Unterschale bevorzugt um eine virtuelle Schwenkachse relativ zu einander verschwenkbar. Bevorzugt bildet ein die Verschwenkbarkeit bereitstellendes Schwenkgelenk zwischen Oberschale und Unterschale, etwa das oben genannte Scharnier, eine, besonders bevorzugt die einzige, dauerhafte Verbindung zwischen den beiden Schalen. Die virtuelle Schwenkachse kann durch eine körperliche Schwenkachse oder durch andere dem Fachmann bekannte Verbindungsmittel realisiert sein, welche genau einen rotatorischen Bewegungsfreiheitsgrad der verbundenen Bauteile erlauben.

In den meisten Fällen wird eine Bodenbearbeitungsmaschine während ihres bestimmungsgemäßen Bodenbearbeitungsbetriebs längs ihrer in Maschinenlängsrichtung verlaufenden Rollachse in Vorwärtsrichtung bewegt. Dies schließt eine gekrümmte Bewegungstrajektorie um eine Kurve nicht aus. Dann ist in der Regel die Rollachse Tangente oder sie liegt nahe der Tangente der momentanen gekrümmten Bewegungsbahn der Bodenbearbeitungsmaschine. Bevorzugt ist daher das Bedienmodul derart wahlweise in der Oberschale und in der Unterschale an der Bodenbearbeitungsmaschine anordenbar, dass sich das Bedienmodul während des Betriebs der Bodenbearbeitungsmaschine wenigstens auch in Vorwärtsrichtung vor dem Maschinenführer befinden kann. Die Leserichtung einer etwaigen Beschriftung von Bedienelementen auf dem Bedienfeld in lateinischer Schrift verläuft in dieser bevorzugten Anordnung in Maschinenquerrichtung, also längs der Nickachse der Bodenbearbeitungsmaschine.

In dieser bevorzugten Anordnung der Bedienvorrichtung verläuft die virtuelle Schwenkachse zwischen Oberschale und Unterschale in einer Ebene, welche mit einer Rollachse oder/und einer Gierachse der Bodenbearbeitungsmaschine einen Winkel von nicht mehr als 30°, vorzugsweise von nicht mehr als 20° aufweist. Bevorzugt verläuft die Ebene parallel zur Rollachse und parallel zur Gierachse. Die virtuelle Schwenkachse kann jedoch um eine zur Gierachse orthogonale Bezugsachse geneigt sein und sich längs der Rollachse dem Aufstandsuntergrund der Bodenbearbeitungsmaschine annähern.

Ausgehend von der Schließstellung sind die Oberschale und die Unterschale bevorzugt um mehr als 90° schwenkbar, um eine ergonomische Zugänglichkeit des Bedienfelds des an einer der beiden Schalen angeordneten Bedienmoduls gewährleisten zu können. Bevorzugt sind die beiden Schalen relativ zueinander um wenigstens 160°, besonders bevorzugt um wenigstens 175°, und noch stärker bevorzugt zwischen 178° und 182° relativ zueinander verschwenkbar.

Bei der oben beschriebenen Ausführungsform, gemäß welcher Schalenboden und Schalenrand bzw. Bedienfeld und Bedienmodulboden um eine Neigeachse relativ zueinander geneigt sind, schließen Neigeachse und Schwenkachse bevorzugt einen Winkel von 75° bis 105°, besonders bevorzugt von 85° bis 95° und noch stärker bevorzugt einen rechten Winkel ein.

Die Unterschale kann bestimmungsgemäß lösbar mit einem Trägerbauteil verbunden sein, welches die Unterschale im betriebsbereiten Zustand der Bodenbearbeitungsmaschine trägt. Hierzu können am Trägerbauteil ein Verrastungsmechanismus und an der Unterschale ein Verrastungsgegenmechanismus ausgebildet sein, welche in einen lösbaren Formschlusseingriff bringbar sind. Beispielsweise kann eine der genannten Mechanismen eine bewegliche Sperrklinke aufweisen, welche bei hergestelltem lösbarem Formschlusseingriff in eine Ausnehmung des jeweils anderen Mechanismus eingreift und aus dieser Ausnehmung zum Lösen des Formschlusseingriffs entfernbar ist. Dann kann das Gehäuse und somit die Bedienvorrichtung gewünschtenfalls von der übrigen Bodenbearbeitungsmaschine entfernt und für die Dauer einer Maschinenruhe an einem sicheren Ort verwahrt werden.

Bevorzugt ist die Unterschale dauerhaft mit dem Trägerbauteil verbunden, beispielsweise durch Verschrauben oder/und Vernieten oder/und Verkleben. Zwar ist auch eine Verschraubung bestimmungsgemäß lösbar, jedoch ist der Aufwand zum Lösen der Verschraubungsverbindung durch den Bedarf an Werkzeug und die Dauer des Werkzeugangriffs zum Lösen der Verschraubungsverbindung so hoch gewählt, dass ein Lösen der Verschraubungsverbindung nur im Rahmen einer Reparatur der Bodenbearbeitungsmaschine erfolgen wird.

Die oben genannte bestimmungsgemäße Lösbarkeit in Abgrenzung zur dauerhaften Verbindung der Unterschale mit dem Trägerbauteil betrifft bevorzugt eine werkzeuglose Lösbarkeit oder, im Falle des Erfordernisses einer Werkzeuganwendung, einen Werkzeugangriff von weniger als 15 Sekunden, um die Unterschale vom Trägerbauteil zu lösen.

Das die Unterschale bzw. das Gehäuse tragende Trägerbauteil ist mit dem Maschinenrahmen verbunden. Das Trägerbauteil kann grundsätzlich fest und starr mit dem Maschinenrahmen verbunden sein. Zur weiteren Anpassung eines Bedienarbeitsplatzes der Bodenbearbeitungsmaschine an die jeweiligen Bedürfnisse des Maschinenführers abhängig von der jeweiligen Betriebssituation kann das Trägerbauteil relativ zum Maschinenrahmen beweglich mit diesem verbunden sein. Die Relativbeweglichkeit des Trägerbauteils, etwa eines Tabletts, relativ zum Maschinenrahmen kann translatorisch sein, sodass der Maschinenführer das Bedienmodul zu sich heran oder von sich weg verschieben kann oder/und sodass der Maschinenführer das Bedienmodul einem Seitenrand der Bodenbearbeitungsmaschine annähern oder von diesem entfernen kann. Alternativ oder zusätzlich kann das Trägerbauteil relativ zum Maschinenrahmen rotatorisch beweglich sein, sodass der Maschinenführer das Bedienfeld in eine für ihn jeweils vorteilhafte Orientierung verbringen kann.

Zur Vermeidung unerwünschter Geräusche oder mechanischer Belastungen kann die Oberschale in der Offenstellung bestimmungsgemäß lösbar mit einem Untergrund, etwa mit dem oben genannten Trägerbauteil, verbunden sein, insbesondere lösbar verbunden sein. Beispielsweise kann die Oberschale überwindbar verrastbar oder/und magnetisch mit dem Trägerbauteil verbunden sein. In einer besonders einfachen Ausführungsform der vorliegenden Erfindung kann die Oberschale in der Offenstellung lose auf einem Untergrund aufliegen.

Zur Versorgung des Bedienmoduls mit Energie oder/und zur Übertragung von Signalen zwischen dem Bedienmodul und einer außerhalb der Bedienvorrichtung an der übrigen Bodenbearbeitungsmaschine angeordneten Datenverarbeitungsanlage der Steuervorrichtung kann wenigstens eine Schale aus Oberschale und Unterschale eine Öffnung aufweisen, durch welche im betriebsbereiten Zustand eine elektrische Verbindungsleitung zu dem Bedienmodul hindurchgeführt ist. Eine Öffnung in jeder der Schalen kann vorgesehen sein, wenn das Bedienmodul bei Anordnung in egal welcher der Schalen unmittelbar mit einer Energiequelle oder mit der Datenverarbeitungsanlage der Steuervorrichtung verbunden sein soll. Eine Öffnung in nur einer der Schalen kann ausreichen, wenn das in der jeweils anderen Schale angeordnete Bedienmodul durch die Öffnung in der einen Schale mit der Energiequelle oder der Datenverarbeitungsanlage verbunden sein soll.

Eine Erleichterung der Herstellung der Verbindung des im Gehäuse aufgenommenen Bedienmoduls mit der Energiequelle oder/und der Datenverarbeitungsanlage der Steuervorrichtung kann dadurch erreicht werden, dass wenigstens eine Schale aus Oberschale und Unterschale auf ihrer Außenseite eine äußere elektrische Verbindungsschnittstelle zur elektrischen Verbindung mit wenigstens einer Bordleitung der Bodenbearbeitungsmaschine aufweist und auf ihrer Innenseite eine mit der äußeren elektrischen Verbindungsschnittstelle elektrisch leitend verbundene innere elektrische Verbindungsschnittstelle zur elektrischen Verbindung mit dem Bedienmodul aufweist. Die äußere elektrische Verbindungsschnittstelle kann dann, wenn das Gehäuse auf einem Untergrund, etwa dem oben genannten Trägerbauteil, der Bodenbearbeitungsmaschine angeordnet ist, über die wenigstens eine Bordleitung mit der Energiequelle oder/und der Datenverarbeitungsanlage verbunden sein. Das in der Schale mit der inneren elektrischen Verbindungsschnittstelle angeordnete Bedienmodul kann mit der inneren elektrischen Verbindungsschnittstelle elektrisch leitend verbunden sein.

Da unabhängig davon, ob sich das Gehäuse in der Öffnungsstellung oder in der Schließstellung befindet, die Unterschale bevorzugt stets mit dem Untergrund verbunden ist, ist bevorzugt die äußere elektrische Verbindungsschnittstelle an der Unterschale vorgesehen. Vorzugsweise ist eine äußere elektrische Verbindungsschnittstelle sowohl an der Unterschale als auch an der Oberschale vorgesehen, wobei die äußere elektrische Verbindungsschnittstelle der Oberschale vorzugsweise immer dann, wenn sich das Gehäuse in der Öffnungsstellung befindet, mit einer oben genannten Bordleitung elektrisch leitend verbunden ist.

Das Bedienmodul weist bevorzugt eine elektrische Kopplungsformation zur Kopplung mit der elektrischen Verbindungsleitung oder/und eine Gegenschnittstelle zur Kopplung mit der inneren elektrischen Verbindungsschnittstelle auf.

Sofern die Bedienvorrichtung bestimmungsgemäß vom Trägerbauteil lösbar und mit diesem verbindbar ausgebildet ist, umfasst bevorzugt die äußere elektrische Verbindungsschnittstelle der Unterschale oder/und eine trägerbauteilseitige Kontaktschnittstelle einen oder mehrere elektrische Steck- oder Federkontakte, sodass der elektrische Kontakt zwischen der äußeren elektrischen Verbindungsschnittstelle und der trägerbauteilseitigen Kontaktschnittstelle werkzeuglos herstellbar ist. Bevorzugt ist eine der Schnittstellen aus der äußeren elektrischen Verbindungsschnittstelle und der trägerbauteilseitigen Kontaktschnittstelle als Stecker und die jeweils andere Schnittstelle als Buchse ausgebildet. Für den Fall der Anordnung einer äußeren elektrischen Verbindungsschnittstelle an der Oberschale gilt für diese das zur Verbindungsschnittstelle der Unterschale Gesagte entsprechend.

Für die zuvor genannte unmittelbare Verbindung des Bedienmoduls mit einer bordeigenen elektrischen Verbindungsleitung gilt ebenfalls, dass eine Verbindung der bordeigenen elektrischen Verbindungsleitung mit der Kopplungsformation bevorzugt werkzeuglos herstellbar und sicherbar ist. Auch hierfür kann eines der beiden Bauteile aus der bordeigenen elektrischen Verbindungsleitung und der Kopplungsformation ein Stecker und das jeweils andere Bauteil eine Buchse sein oder aufweisen, wobei bevorzugt Stecker und Buchse werkzeuglos, etwa durch eine Überwurfhülse mit Gewinde oder mit Bajonettformation, formschlüssig gegen ein unbeabsichtigtes Lösen aneinander sicherbar sind.

Zur Sicherung des Bedienmoduls an der zu seiner Aufnahme ausgewählten Schale kann gemäß einer bevorzugten Weiterbildung vorgesehen sein, dass jede Schale aus Oberschale und Unterschale eine Festlegeformation aufweist und dass das Bedienelement eine Festlegegegenformation aufweist, wobei die Festlegeformation und die Festlegegegenformation zur Sicherung des Bedienmoduls an einer Schale aus Oberschale und Unterschale in einen bestimmungsgemäß lösbaren Formschlusseingriff bringbar sind.

Die Festlegeformation und Festlegegegenformation können in einem einfachen Fall einem Klettverschluss bilden, durch Anordnen eines Faser-Schlaufengewirrs als Festlegeformation an einem Bauteil aus Bedienmodul und Schale und durch Anordnen einer elastischen Hakenanordnung als Festlegegegenformation am jeweils anderen Bauteil.

Eine Formation aus Festlegeformation und Festlegegegenformation kann einen Vorsprung aufweisen, welche zum Formschlusseingriff in eine Ausnehmung als der jeweils anderen Formation aus Festlegeformation und Festlegegegenformation eingreift. Der Vorsprung kann als an beiden Enden festgelegter Bügel oder als einseitig auskragender Vorsprung ausgebildet sein. Wenigstens eine Formation aus Festlegeformation und Festlegegegenformation kann zwischen einer Formschlusseingriffsstellung und Freigabestellung verlagerbar sein, um den einmal hergestellten Formschlusseingriff bestimmungsgemäß lösen zu können. Die Verlagerung zwischen Formschlusseingriffsstellung und Freigabestellung kann nur durch Kraftaufwand erfolgen. Zur Verhinderung einer unberechtigten Entnahme des Bedienmoduls aus einer Schale kann die Verlagerung die Anwendung eines Schließgeheimnisses erfordern, etwa durch einen Schlüssel, einen alphanumerischen Code, einen Fingerabdruck, eine Datei und dergleichen.

Bevorzugt sind die Festlegeformation und die Festlegegegenformation asymmetrisch an ihren jeweiligen Bauteilen: Schale und Bedienmodul, vorgesehen, sodass das Bedienmodul nur in einer Relativstellung relativ zu Oberschale oder Unterschale in die jeweilige Schale einsetzbar und dort durch lösbaren Formschlusseingriff sicherbar ist.

Für eine erleichterte Inbetriebnahme der Bodenbearbeitungsmaschine und insbesondere der Bedienvorrichtung kann vorgesehen sein, dass wenigstens eine Schale aus Oberschale und Unterschale einerseits und das Bedienmodul andererseits derart aufeinander abgestimmt sind, dass bei Herstellung des lösbaren Formschlusseingriffs zwischen der Festlegeformation der jeweiligen Schale und der Festlegegegenformation des Bedienmoduls automatisch eine elektrisch leitende Verbindung zwischen der inneren elektrischen Verbindungsschnittstelle der jeweiligen Schale und der Gegenschnittstelle des Bedienmoduls hergestellt wird.

Zu einer solchen Abstimmung kann die oben bereits beschriebene komplementäre Ausbildung von Innenseite der Schale und der im betriebsbereiten Zustand der Schaleninnenseite gegenüberliegenden Außenseite des Bedienmoduls beitragen.

Die Abstimmung zur automatischen Herstellung der elektrisch leitenden Verbindung zwischen der inneren elektrischen Verbindungsschnittstelle und der Gegenschnittstelle kann wenigstens teilweise auch durch eine von der Festlegeformation und der Festlegegegenformation vorgegebene Bewegungsabfolge der Relativbewegung von Bedienmodul und Schale bei der Anordnung des Bedienmoduls in der zur Anordnung ausgewählten Schale bewirkt sein. Eine solche Abfolge kann durch entsprechende körperliche oder/und kinematische Ausbildung der Festlegeformation und der Festlegegegenformation erreicht werden. Zusätzlich zu den oben genannten Elementen Vorsprung und Ausnehmung, von welchen wenigstens eine zum bestimmungsgemäßen Lösen eines zwischen ihnen hergestellten Formschlusseingriffs zwischen Formschlusseingriffsstellung und Freigabestellung verlagerbar ist, können die Festlegeformation und die Festlegegegenformation eine an Schale und Bedienmodul ausgebildete Kombination jeweils feststehender formschlussbildender Elemente: Vorsprung und Ausnehmung, aufweisen, welche relativ zu der sie jeweils tragenden Struktur aus Bedienmodul und Schale unbeweglich sind. Ein Bewegungsablauf kann dann derart bestimmt sein, dass erst die Kombination feststehender formschlussbildender Elemente an beiden Bauteilen miteinander in Formschlusseingriff gebracht werden müssen und dieser Formschlusseingriff dann nur einen Bewegungsfreiheitsgrad belässt, um die Kombination lösbarer formschlussbildender Elemente in den bestimmungsgemäß lösbaren Formschlusseingriff zu bringen. Beispielsweise kann die Kombination feststehender formschlussbildender Elemente wenigstens zwei mit Abstand voneinander vorgesehene auskragende Vorsprünge an einem Bauteil und zwei mit demselben Abstand voneinander vorgesehene Ausnehmungen oder Vertiefungen am jeweils anderen Bauteil umfassen.

Grundsätzlich kann das Bedienmodul eine Datenverarbeitungsanlage aufweisen, welche dazu ausgebildet ist, Signale von Sensoren an der Bodenbearbeitungsmaschine und Signale von Bedieneingaben an den Bedienelementen zu verarbeiten und Steuerbefehle an Aktuatoren an der Bodenbearbeitungsmaschine auszugeben.

Bevorzugt weist die Steuervorrichtung der Bodenbearbeitungsmaschine wenigstens auch eine außerhalb des Bedienmoduls angeordnete, vom Maschinenrahmen getragene Datenverarbeitungsanlage auf, mit welcher das Bedienmodul zur Übertragung von Signalen verbindbar ist. Das Bedienmodul dient dann verstärkt als Eingabemodul zur Eingabe von Daten und Steuerbefehlen. Dies verringert die Kosten des Bedienmoduls und erleichtert einen Austausch von Bedienmodulen an der Bodenbearbeitungsmaschine zur Anpassung an veränderte Bearbeitungsaufgaben oder an neue ergonomische Erkenntnisse.

Die Datenverarbeitungsanlage, sei sie nun im Bedienmodul oder/und außerhalb des Bedienmoduls in der übrigen Bodenbearbeitungsmaschine angeordnet, umfasst wenigstens einen Prozessor, wie etwa Mikroprozessor, und wenigstens einen Speicher, in welchem wenigstens ein von dem wenigstens einen Prozessor ausführbares Programm zur Steuerung von Funktionsbaugruppen der Bodenbearbeitungsmaschine gespeichert ist. Die Datenverarbeitungsanlage umfasst wenigstens einen Speicher zur Speicherung von Daten, wie beispielsweise von Sensordaten, Daten aufgrund von Betätigung eines oder mehrerer der Bedienelemente des Bedienpults, Daten zur Ausführung des wenigstens einen Programms. Die Bodenbearbeitungsmaschine kann wenigstens einen oder mehrere signalübertragungsmäßig mit der Datenverarbeitungsanlage verbundene Sensoren aufweisen, welche den Betrieb der Bodenbearbeitungsmaschine erfassen, wie etwa deren Fahrgeschwindigkeit, Stellungen und Zustände von Aktuatoren, Lenkwinkel von Fahrwerkteilen, eine räumliche Anordnung oder/und Orientierung von Bauteilen der Bodenbearbeitungsvorrichtung, etwaige Bewegungsgeschwindigkeiten oder/und Bewegungsrichtungen von Bauteilen der Bodenbearbeitungsvorrichtung und dergleichen.

Zur Rückmeldung von Betriebszuständen an den Maschinenführer umfasst das Bedienmodul bevorzugt wenigstens eine Ausgabevorrichtung zur Ausgabe von Signalen oder/und Daten. Eine solche Ausgabevorrichtung kann einen Monitor, insbesondere einen auch als Eingabevorrichtung verwendbaren Touchscreen, einen Lautsprecher, eine Signallampe, eine haptische Ausgabevorrichtung, wie etwa einen Rüttler, und der gleichen umfassen. So kann das Bedienmodul Daten von der Datenverarbeitungsanlage, unabhängig von deren Anordnungsort, an den Maschinenführer ausgeben.

Das Gehäuse hat wenigstens zwei Schalen, eine Oberschale und eine Unterschale. Daher kann das Gehäuse wenigstens zwei Bedienmodule gleichzeitig dauerhaft aufnehmen. So ist es zum einen möglich ein Modul entweder in der einen oder in der anderen Schale anzuordnen. Für einen erweiterten Funktionsumfang kann das oben genannte Bedienmodul ein erstes Bedienmodul sein, wobei die Steuervorrichtung zusätzlich zu dem ersten Bedienmodul ein zweites Bedienmodul aufweist. Jedes Bedienmodul aus erstem und zweitem Bedienmodul ist dann bevorzugt in jeder Schale aus Oberschale und Unterschale funktionsbereit anordenbar und im betriebsbereiten Zustand der Bodenbearbeitungsmaschine auch tatsächlich angeordnet.

Es gilt das oben zum Bedienmodul bzw. zum ersten Bedienmodul Gesagte in gleicher Weise für das zweite Bedienmodul. Insbesondere sind die elektrischen Kopplungsformationen des ersten und des zweiten Bedienmoduls identisch ausgebildet. Da auch die inneren elektrische Schnittstellen von Ober- und Unterschale identisch ausgebildet sind, ist die Positionierung von erstem und zweiten Bedienmodul in Unter oder Oberschale frei wählbar. Das Bedienfeld des zweiten Bedienmoduls unterscheidet sich bevorzugt vom Bedienfeld des ersten Bedienmoduls hinsichtlich der Art der dort angeordneten Bedienelemente oder/und der Anordnung der Bedienelemente oder/und der Funktionszuordnung von Bedienelementen, um dem Maschinenführer unterschiedliche Funktionen an beiden Bedienmodul bereitzustellen und dem Maschinenführer auf den ersten Blick zu vermitteln, an welchem der beiden Bedienmodule er gerade arbeitet.

Grundsätzlich kann es ausreichen, wenn das Gehäuse genau eine Oberschale und eine Unterschale aufweist. Ein größerer Raum, welcher lokal mit wenigstens einem Bedienmodul bestückt werden kann, kann jedoch dadurch an der Bodenbearbeitungsmaschine bereitgestellt werden, dass das Gehäuse zusätzlich zur Oberschale eine zweite Oberschale oder/und zusätzlich zur Unterschale eine zweite Unterschale aufweist. Bevorzugt weist das Gehäuse mehr Oberschalen als Unterschalen auf, da die Unterschale bevorzugt wenigstens während des Betriebs der Bodenbearbeitungsmaschine fest mit einem Untergrund verbunden ist. Besonders bevorzugt ist daher eine Ausführungsform mit einer Unterschale und zwei Oberschalen. Bevorzugt sind die Oberschalen mit identischem Oberschalenvolumen ausgebildet, besonders bevorzugt als Gleichteile oder als spiegelsymmetrisch ausgebildete Bauteile.

Dann, wenn das Gehäuse zusätzlich zur Oberschale eine zweite Oberschale aufweist, sind bevorzugt die zweite Oberschale und die Unterschale um eine zweite virtuelle Schwenkachse relativ zu einander verschwenkbar. Bevorzugt ist jede virtuelle Schwenkachse zur Relativverschwenkung einer Oberschale relativ zur Unterschale sowohl an einem geradlinigen Rand der Unterschale als auch der Oberschale realisiert. Um das wenigstens eine Bedienmodul in einem möglichst großen Bereich an der Bodenbearbeitungsmaschine an einer Schale anordnen zu können, sind bei Anordnung zweier Oberschalen bevorzugt die virtuelle Schwenkachse und die zweite virtuelle Schwenkachse an entgegengesetzten Rändern der Unterschale ausgebildet.

Die beiden Oberschalen und die Unterschale können einen Arbeitsplatz eines Maschinenführers an der Bodenbearbeitungsmaschine ergonomisch vorteilhaft mit gekrümmten Verlauf umgeben, wenn die zweite virtuelle Schwenkachse mit der ersten virtuellen Schwenkachse einen Winkel einschließt. Dieser sollte jedoch vorzugsweise nicht größer sein als 30°. Im Öffnungszustand des Gehäuses ist dann die Abfolge von einem Endbereich des Gehäuses über beide virtuellen Schwenkachsen weg zum anderen Endbereich des Gehäuses: Oberschale - Unterschale - zweite Oberschale.

Bei vorliegend besonders interessierenden Bodenbearbeitungsmaschinen, wie etwa einem Gleitschalungsfertiger, erstrecken sich die Bedienstände in der Regel geradlinig in Maschinenquerrichtung. Besonders bevorzugt ist daher die zweite Schwenkachse parallel zur ersten Schwenkachse orientiert. Bevorzugt ist das Gehäuse bezüglich einer Symmetrieebene spiegelsymmetrisch ausgebildet. Die Symmetrieebene verläuft dabei orthogonal zu einem Boden der Unterschale als Winkelhalbierende bzw. als Parallele zu den beiden virtuellen Schwenkachsen, welche die beiden Oberschalen mit der gemeinsamen Unterschale definieren.

Die vorliegende Erfindung kann besonders vorteilhaft an einem Gleitschalungsfertiger angewendet werden.

Die vorliegende Erfindung wird nachfolgend anhand der beiliegenden Zeichnungen näher erläutert. Es stellt dar:
- Fig. 1: eine schematische perspektivische Ansicht einer erfindungsgemäßen Bodenbearbeitungsmaschine in beispielhafter Gestalt eines Gleitschalungsfertigers von schräg hinten und oben,
- Fig. 2: eine schematische perspektivische Ansicht des Bedienstands der Bodenbearbeitungsmaschine von Fig. 1 mit den Gehäusen der Steuervorrichtung in der Offenstellung,
- Fig. 3: die schematische perspektivische Ansicht des Bedienstands von Fig. 2 mit den Gehäusen der Steuervorrichtung in der Schließstellung,
- Fig. 4: eine schematische perspektivische Ansicht des mit Bedienmodulen versehenen Gehäuses der Figuren 1 und 2,
- Fig. 5: eine schematische perspektivische Ansicht des Gehäuses von Fig. 4 mit Ansicht der Gehäusevorderseite,
- Fig. 6: eine schematische perspektivische Ansicht des Gehäuses von Fig. 5 zwischen Offen- und Schließstellung,
- Fig. 7: eine schematische perspektivische Ansicht der in dem Gehäuse der Figuren 4 bis 6 angeordneten Bedienmodulen
- Fig. 8: eine der Perspektive der Fig. 4 entsprechende Ansicht des Gehäuses von Fig. 4 ohne Bedienmodule, und
- Fig. 9: eine schematische Unteransicht des Gehäuses von Fig. 4.

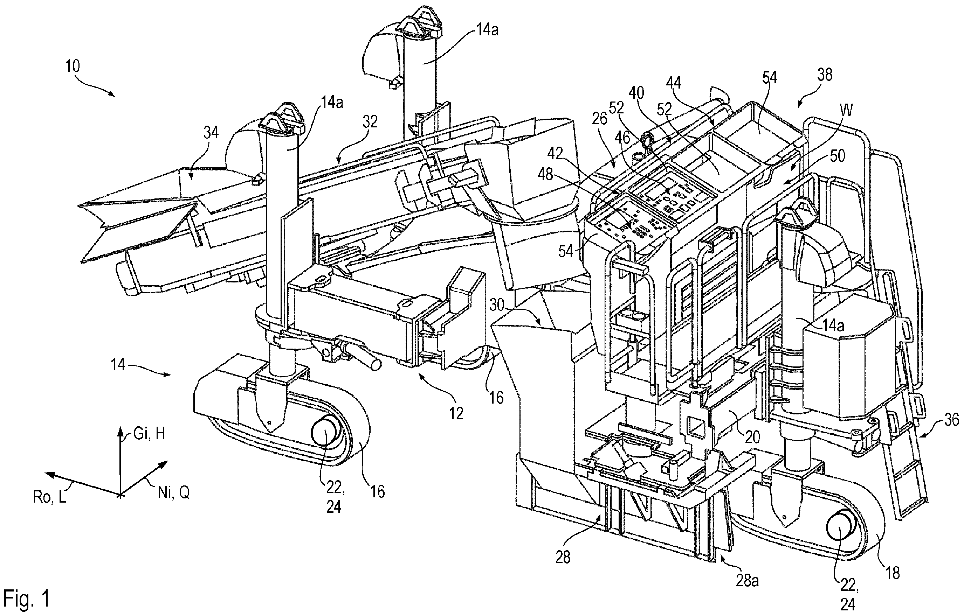

In Figur 1 ist eine erfindungsgemäße Ausführungsform einer Bodenbearbeitungsmaschine 10 (nachfolgend auch nur als "Maschine 10" bezeichnet) in Gestalt eines Gleitschalungsfertigers schematisch dargestellt. Die Maschine 10 umfasst einen Maschinenrahmen 12, welcher von einem Fahrwerk 14 getragen ist. Das Fahrwerk 14 weist eine Mehrzahl von Laufwerken auf, welche auf einem Aufstandsuntergrund abrollen können. Im dargestellten Beispiel sind die Laufwerke Kettenlaufwerke mit einer umlaufenden Kette. Wenigstens eines oder alle der Laufwerke können Rollen- bzw. Radlaufwerke sein. Im dargestellten Beispiel weist das Fahrwerk 14 zwei vordere Laufwerke 16 und ein hinteres Laufwerk 18 auf. Anstelle dieser Konfiguration können auch zwei hintere Laufwerke vorgesehen sein. Das hintere Laufwerk 18 ist längs eines Laufwerksträgers 20 in und entgegen der Maschinenquerrichtung Q längs der Nickachse Ni durch einen entsprechenden Stellmotor positionierbar.

Jedes der Laufwerke 16 und 18 weist in an sich bekannter Weise einen Hydromotor 22 als Fahrantrieb 24 auf. Eine Brennkraftmaschine 26, genauer eine Diesel-Brennkraftmaschine 26, liefert gleichsam als Kraftwerk der Maschine 10 die für den Betrieb der Maschine 10 erforderliche Energie. Aus der rotierenden Kurbelwelle der Brennkraftmaschine 26 wird die notwendige Energie abgeleitet, um zusätzlich zur kinetischen Energie der Kurbelwelle über Hydraulikpumpen hydraulische Energie für hydraulische Aktuatoren und Verbraucher, wie Hydromotoren und Kolben-ZylinderAnordnungen, über einen Generator elektrischer Energie für elektrische Verbraucher einschließlich eines aufladbaren elektrischen Energiespeichers und um optional über Pneumatik-verdichter Pneumatikdruck für pneumatische Aktuatoren und Verbraucher bereitzustellen.

Über Hubsäulen 14a des Fahrwerks 14 ist der Abstand des Maschinenrahmens 10 zum Aufstandsuntergrund der Maschine 10 längs der parallel zur Maschinenhöhenrichtung H verlaufenden Gierachse Gi für jedes Laufwerk individuell einstellbar.

Lediglich beispielhaft an seinem in Figur 1 linken Maschinenrand ist am Maschinenrahmen 12 eine an sich bekannte Gleitschalung 28 zur Bildung eines Betonformkörpers als Bodenbearbeitungsvorrichtung angeordnet. Die Gleitschalung 28 wird über einen Trichter 30 mit fließfähigem Beton beschickt. Der Trichter 30 wird über ein Förderband 32 mit fließfähigem Beton beliefert, welchen das Förderband 32 aus einem Aufnahmebunker 34 am vorderen Endbereich der Maschine 10 zum Trichter 30 fördert.

Die Gleitschalung 28 bildet zusammen mit dem Aufstandsuntergrund der Maschine 10 einen Formhohlraum, in welchem der vom Trichter 30 in den vom Hohlraum einströmende fließfähige Beton in an sich bekannter Weise als Positiv-Abbild der den Formhohlraum in Umfangsrichtung um die parallel zur Maschinenlängsrichtung L verlaufende Rollachse Ro umgebenden und als Negativform dienenden Schalungswand geformt wird. Der fließfähige Beton ist spätestens am Auslass 28a der Gleitschalung 28 ortsfest relativ zu dem zu seiner Formgebung beitragenden Aufstandsuntergrund und tritt im Betrieb der Maschine 10 bei Betrachtung in einem gleitschalungsfesten Koordinatensystem durch den Auslass 28a am hinteren Ende der Gleitschalung 28 mit einer Geschwindigkeit aus, welche der Fahr- und damit der Vorschubgeschwindigkeit der Maschine 10 betragsmäßig entspricht, jedoch zu dieser entgegengesetzt gerichtet ist. Die Vorschubgeschwindigkeit der Maschine 10 und die durch die Gleitschalung 28 ausgebrachte Betonmischung sind so aufeinander abzustimmen, dass der Beton zwischen seinem Eintritt in die und seinem Austritt aus der Gleitschalung 28 formstabil abbindet, sodass er nach dem Austritt aus der Gleitschalung 28 seine erhaltene Form behält.

Die Maschine 10 weist einen über einen Aufstieg 36 vom Aufstandsuntergrund aus erreichbaren Bedienstand 38 auf, welcher sich längs der Nickachse Ni über im Wesentlichen die gesamte Maschinenbreite der Maschine 10 erstreckt. Die Gleitschalung 28 kann abweichend von der Darstellung von Figur 1 auch am entgegengesetzten rechten Maschinenrand angebracht sein. Ein auf dem Bedienstand 38 arbeitender Maschinenführer verbringt einen wesentlichen Teil seiner Arbeitszeit auf dem Bedienstand 38 mit der Beobachtung des aus der Gleitschalung 28 austretenden Betonformkörpers. Deshalb hält sich der Maschinenführer überwiegend an jenem Endbereich des Bedienstands 38 auf, welcher der Gleitschalung 28 am nächsten liegt.

Auf dem Bedienstand 38 ist zur Steuerung der Maschine 10 eine Steuervorrichtung 40 angeordnet, welche zwei Gehäuse 42 und 44 sowie zwei Bedienmodule 46 und 48 umfasst.

Die beiden Gehäuse 42 und 44 sind längs der Nickachse Ni nebeneinander angeordnet und sind bezüglich einer zur Nickachse Ni orthogonalen Symmetrieebene spiegelbildlich ausgebildet. Unter Berücksichtigung der genannten Spiegelsymmetrie genügt nachfolgend daher die Beschreibung des Gehäuses 42, dessen Beschreibung unter Berücksichtigung der Symmetriebedingung auch für das Gehäuse 44 gilt.

Jedes der Gehäuse 42 und 44 von Figur 1 weist eine fest mit einem Pult 50 als einem Trägerbauteil verbundene Unterschale 52 und eine um eine Schwenkachse P relativ zur Unterschale 52 schwenkbare Oberschale 54 auf. Aufgrund der spiegelsymmetrischen Ausbildung der Gehäuse 42 und 44 liegen in ihrer Offenstellung ihre Unterschalen 52 längs der Nickachse Ni unmittelbar nebeneinander und zwischen ihren Oberschalen 54.

In Figur 1 sind beide Gehäuse 42 und 44 in ihrer jeweiligen Offenstellung gezeigt. Die Bedienmodule 46 und 48 befinden sich dabei ausschließlich im Gehäuse 42, und zwar das Bedienmodul 46 in der Unterschale 52 und das Bedienmodul 48 in der Oberschale 54 des Gehäuses 42.

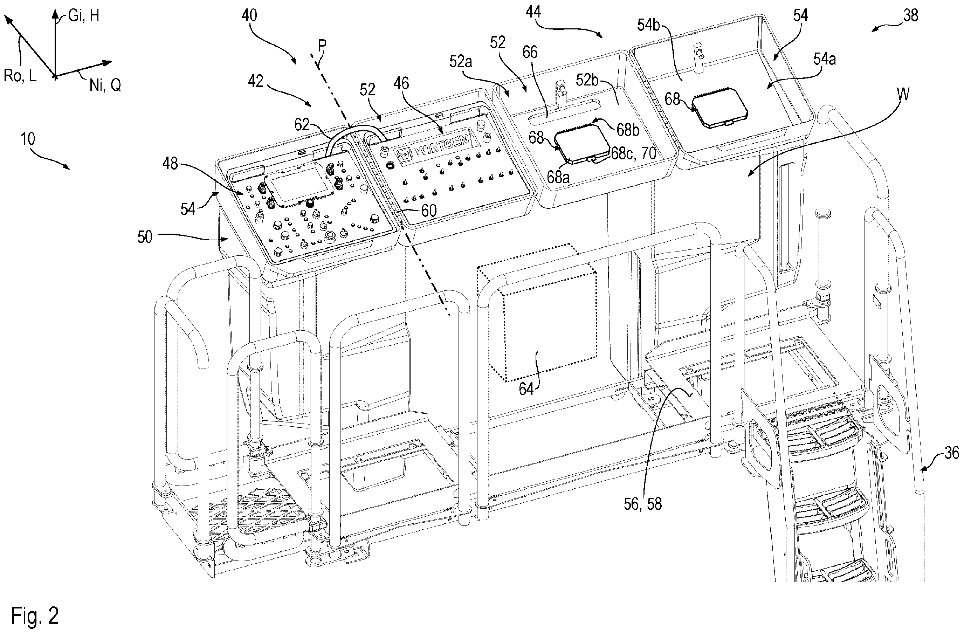

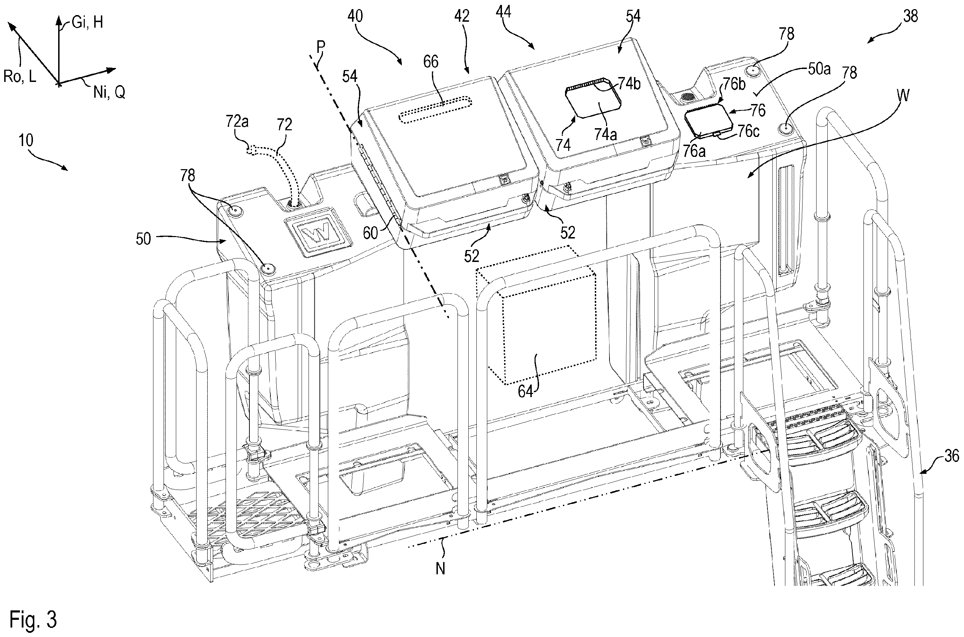

In Figur 2 ist der Bedienstand 38 mit seinem Aufstieg 36 in Alleinstellung dargestellt, wobei die Gehäuse 42 und 44 sich weiterhin in ihrer jeweiligen Offenstellung befinden. In Figur 3 ist der Bedienstand 38 mit seinem Aufstieg 36 in derselben Perspektive wie in Figur 2 dargestellt, jedoch mit den Gehäusen 42 und 44 in der Schließstellung.

In den Figuren 2 und 3 ist ein Rahmen 56 als Teil des Bedienstandbodens 58 dargestellt, welcher in Figur 1 vollständig zu sehen ist. Auf diesem Bedienstandboden 58 befindet sich der Maschinenführer während seiner Tätigkeit zur Steuerung eines bestimmungsgemäßen Betriebs der Bodenbearbeitungsmaschine 10.

Die Oberschalen 54 und die Unterschalen 52 sind relativ zueinander um die Schwenkachse P zwischen der in Figur 3 gezeigten Schließstellung und der in Figur 2 gezeigten Offenstellung um etwa 180° relativ zueinander verschwenkbar. Der besseren Übersichtlichkeit wegen ist nur die Schwenkachse P an dem die Oberschale 54 mit der Unterschale 52 verbindenden Scharnier 60 des Gehäuses 42 dargestellt. Die Schwenkachse P liegt in einer Ebene, welche parallel zu der durch die Gierachse Gi und die Rollachse Ro aufgespannten Ebene verläuft. Allerdings ist die Schwenkachse P im dargestellten bevorzugten Ausführungsbeispiel weder parallel zur Rollachse Ro noch zur Gierachse Gi.

Figur 2 zeigt anhand des von Bedienmodulen unbelegten Gehäuses 44 die bezüglich jeder von zwei zueinander orthogonalen Raumrichtungen konkave Innenseite 52a der Unterschale 52 sowie die bezüglich jeder von zwei zueinander orthogonalen Raumrichtungen konkave Innenseite 54a der Oberschale 54. Eine auch für das Gehäuse 42 geltende mögliche Ausgestaltung der Unterschale 52 und der Oberschale 54 ist in Figur 2 am Gehäuse 44 dargestellt.

Das Bedienmodul 48 in Figur 2 kann durch ein Verbindungskabel 62 Signale und Energie übertragend mit dem Bedienmodul 46 verbunden sein. Das Bedienmodul 46 ist dann das einzige Bedienmodul, welches mit einer bordeigenen Energieversorgung der Maschine 10 und gegebenenfalls mit einer Datenverarbeitungsanlage 64 der Maschine 10 verbunden ist. Die Datenverarbeitungsanlage 64 kann im Pult 50 des Bedienstands 38 oder an einer anderen geeigneten Stelle in der Maschine 10 angeordnet sein.

Die Signale und Energie übertragende Verbindung eines Bedienmoduls mit bordeigenen Komponenten der Maschine 10 kann im Wege einer Kabelverbindung realisiert sein. Hierzu kann in einer Schale, wie beispielsweise in der Unterschale 52 des Gehäuses 44 ein die Unterschale 52 durchsetzendes Loch 66 als Kabeldurchführung ausgebildet sein. Zusätzlich oder alternativ kann auf der konkaven Innenseite 52a der Unterschale 52, insbesondere auf der Innenseite des Schalenbodens 52b, eine innere elektrische Verbindungsschnittstelle 68 ausgebildet sein, welche bei Anordnung eines Bedienmoduls in der Unterschale 52 automatisiert eine Signale und Energie übertragende elektrische Verbindung des Bedienmoduls mit bordeigenen Komponenten der Maschine 10 herstellt. Der Schalenboden der Oberschale 54 ist dementsprechend mit 54b bezeichnet. Wie nachfolgend beschrieben ist, ist die innere elektrische Verbindungsschnittstelle 68 auch eine innere mechanische Verbindungsschnittstelle.

Die lediglich schematisch dargestellte innere elektrische Verbindungsschnittstelle 68 kann einen körperlichen Aufbau 68a aufweisen, welcher vom Schalenboden 52b weg vorsteht. Das Bedienmodul kann auf seinem Bedienmodulboden eine entsprechende komplementäre Ausnehmung als Teil einer bedienmodulseitigen Gegenschnittstelle aufweisen. Bei Anordnung des Bedienmoduls in der Unterschale 52 oder in der Oberschale 54, welche zur Sicherstellung einer Anordenbarkeit eines Bedienmoduls in beiden Schalen 52 und 54 eine identische innere elektrische Verbindungsschnittstelle 68 aufweisen kann, ragt der körperliche Vorsprung 68a der inneren elektrischen Verbindungsschnittstelle 68 in die Ausnehmung der bedienmodulseitigen Gegenschnittstelle ein. Selbstverständlich kann die Zuordnung von Vorsprung und Ausnehmung abweichend vom dargestellten Ausführungsbeispiel gewählt sein. Um sicherzustellen, dass ein Bedienmodul 46 oder 48 auf einer anderen ebenen Unterlage als einem Schalenboden von Unterschale 52 oder Oberschale 54 abgestellt werden kann, ohne zu kippen und ohne zu wackeln, ist bevorzugt der körperliche Aufbau 68a in den inneren elektrischen Verbindungsschnittstelle 68 der Schalen 52 und 54 und eine dem Aufbau entsprechende und diesen aufnehmende Ausnehmung in der Gegenschnittstelle der Bedienmodule 46 und 48 ausgebildet.

Die innere elektrische Verbindungsschnittstelle 68 weist eine Kontaktanordnung 68b, etwa eine Federkontaktleiste, auf, welche bei Verbindung der inneren elektrischen Verbindungsschnittstelle 68 mit einer Gegenschnittstelle eines Bedienmoduls aufgrund der komplementären Ausbildung von Verbindungsschnittstelle 68 und Gegenschnittstelle eine gegen Kontaktanordnung aufseiten des Bedienmoduls kontaktiert.

Eine federvorgespannte Rastfalle 68c kann in eine entsprechende Rastausnehmung in der Gegenschnittstelle des Bedienmoduls eingreifen und das Bedienmodul so an der jeweiligen Schale formschlüssig sichern. Die federvorgespannte Rastfalle 68c ist Teil einer Festlegeformation 70, die Rastausnehmung ist dann Teil einer Festlegegegenformation aufseiten des Bedienmoduls. Die Rastfalle 68c ist durch einen in den Figuren nicht dargestellten Aktuator in den körperlichen Aufbau 68a der inneren elektrischen Verbindungsschnittstelle 68 zurückziehbar, um eine einmal hergestellte körperliche Verbindung zwischen der jeweiligen Schale und einem Bedienmodul wieder zu lösen. Der Aktuator kann motorisch oder manuell, etwa durch ein Hebelgestänge, betätigbar sein.

In Figur 3 sind die Gehäuse 42 und 44 in der Schließstellung dargestellt, in welcher sie die darin aufgenommenen Bedienmodule oder den von den konkaven Innenseiten 52a und 54a umschlossenen Innenraum vollständig umschließen.

Lediglich strichliniert ist in Figur 3 angedeutet, dass die Oberschale 54 des Gehäuses 42 ein Loch 66 als Kabeldurchführung aufweisen kann, um abweichend von der Darstellung von Figur 2 eine durch das Pult 50 geführte bordeigene Verbindungsleitung 72 durch das Loch 66 hindurch mit dem in der Oberschale 54 aufgenommenen Betriebsmodul 48 signal- und energieübertragungsmäßig zu verbinden. Der Stecker 72a am freien Längsende der bordeigenen Verbindungsleitung 72 bildet eine erste Bordschnittstelle zur Verbindung eines Bedienmoduls 46 oder 48 mit einer bordeigenen Energieversorgung oder/und mit der bordeigenen Datenverarbeitungsanlage 64 der Maschine 10.

Auf der Außenseite des Bedienmodulbodens 54b der Oberschale 54 des Gehäuses 44 in Figur 3 ist eine äußere elektrische Verbindungsschnittstelle 74 dargestellt, welche eine Vertiefung bzw. Ausnehmung 74a im Bedienmodulboden 54b auf dessen Außenseite aufweist. Die äußere elektrische Verbindungsschnittstelle 74 ist im Prinzip aufgebaut wie die oben beschriebene Gegenschnittstelle des Bedienmoduls, denn die äußere elektrische Verbindungsschnittstelle 74 ist in derselben Weise zur mechanischen und elektrischen Kopplung mit einer zweiten Bordschnittstelle 76 auf dem im Öffnungszustand des Gehäuses 44 bedeckten Untergrund 50a des als Trägerbauteil dienenden Pults 50 ausgebildet wie die Gegenschnittstelle des Bedienmoduls zur mechanischen elektrischen Kopplung mit der inneren elektrischen Verbindungsschnittstelle 68 ausgebildet ist.

Die äußere elektrische Verbindungsschnittstelle 74, welche wie die zuvor beschriebene innere elektrische Verbindungsschnittstelle 68 auch eine äußere mechanische Verbindungsschnittstelle ist, auf der Außenseite des Bedienmodulbodens 54b ist kleiner als die innere elektrische Verbindungsschnittstelle 68 auf der Innenseite desselben Bedienmodulboden 54b ausgebildet und ist bei Betrachtung orthogonal zum Bedienmodulboden 54b vollständig von der flächenmäßig größeren inneren elektrischen Verbindungsschnittstelle 68 überlappt. Eine elektrische Gegenkontaktanordnung 74b an der äußeren Verbindungsschnittstelle 74 dient der elektrischen Kontaktierung durch eine Kontaktanordnung 76b am körperlichen Aufbau 76a der zweiten Bordschnittstelle 76. Eine in die in Figur 3 gezeigte Auskragstellung federvorgespannte Rastfalle 76c dient der vorübergehenden formschlüssigen Fixierung der Oberschale 54 über dem Untergrund 50a in der Offenstellung des Gehäuses 44.

Die Kontakte der Gegenkontaktanordnung 74b sind unmittelbar mit den Kontakten der Kontaktanordnung 68b auf der Innenseite der Oberschale 54 verbunden. Daher ist dann, wenn die Oberschale 54 über ihre äußere elektrische Verbindungsschnittstelle 74 in bestimmungsgemäßen Rasteingriff mit der zweiten Bordschnittstelle 76 steht, ein auf der konkaven Innenseite 54a der Oberschale 54 angeordnetes Bedienmodul über seine Kontaktanordnung in seiner Gegenschnittstelle, die Kontaktanordnung 68b der inneren elektrischen Verbindungsschnittstelle 68 der Oberschale 54, die Gegenkontaktanordnung 74b der äußeren elektrischen Verbindungsschnittstelle 74 der Oberschale 54 und die Gegenkontaktanordnung 76b der zweiten Bordschnittstelle elektrisch mit einer bordeigenen Energieversorgung und mit der bordeigenen Datenverarbeitungsanlage 64 der Maschine 10 verbunden.

Mit Ausnahme der kleineren Abmessungen ist die zweite Bordschnittstelle 76 wie die innere elektrische Verbindungsschnittstelle 68 ausgebildet, deren Beschreibung daher auch auf die zweite Bordschnittstelle 76 anwendbar ist, wobei lediglich die Zahl 68 durch die Zahl 76 zu ersetzen ist. Der körperliche Aufbau 76a ist komplementär zur Ausnehmung 74a der äußeren elektrischen Verbindungsschnittstelle 74 ausgebildet und ragt in der Offenstellung des Gehäuses 44 in die Ausnehmung 74a der Oberschale 54 ein.

Die Oberschale 54 des im Ausführungsbeispiel mit Bedienmodulen 46 und 48 bestückten Gehäuses 42 liegt in der Offenstellung unverriegelt lediglich auf Auflagepuffern 78 am Pult 50 auf. Die unterschiedliche Darstellung der Gestaltung der Gehäuse 42 und 44 im Ausführungsbeispiel dient lediglich der Information über grundsätzlich mögliche Ausgestaltungsformen. In der Regel werden die Gehäuse 42 und 44 im Rahmen der oben genannten spiegelbildlichen Ausgestaltung identisch ausgebildet sein.

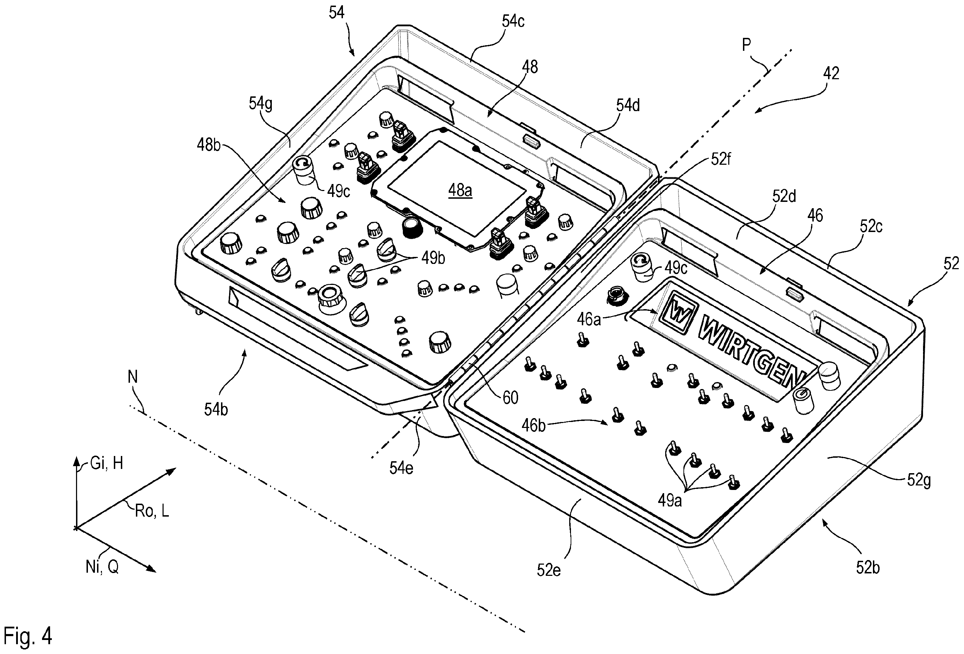

In Figur 4 ist das Gehäuse 42 mit den darin aufgenommenen Bedienmodulen 46 und 48 in Alleinstellung dargestellt. Die Bedienmodule 46 und 48 weisen jeweils eine Anzeigevorrichtung 46a bzw. 48a zur Anzeige von Daten sowie zur Ausgabe von Information auf. Die Anzeigevorrichtungen 46a und 48a sind verschieden aufgebaut und werden im Betrieb für unterschiedliche visuelle Informationsausgaben genutzt. Weiterhin weist jedes Bedienmodul 46 und 48 jeweils ein eigenes Bedienfeld 46b bzw. 48b mit darauf individuell angeordneten Bedienelementen, siehe beispielsweise Bedienelemente, wie Kippschalter 49a, Druckschalter 49b und Drehschalter 49c, auf. Die Bedienfelder 46b und 48b weisen eine identische Gesamtfläche auf. Die Bedienelemente der beiden Bedienfelder 46b und 48b unterscheiden sich hinsichtlich ihrer Anordnung auf dem Bedienfeld sowie hinsichtlich ihrer Funktions- und Betätigungsart. Während auf dem Bedienfeld 46b überwiegend Kippschalter 49a und nur einige wenige Drehschalter 49c und Druckschalter 49b angeordnet sind, sind auf dem Bedienfeld 48b überwiegend Dreh- und Druckschalter 49c bzw. 49b angeordnet.

Grundsätzlich können die Bedienfelder 46b und 48b zur Bedienung unterschiedlicher Maschinenfunktionen ausgebildet sein. Beispielsweise kann mit einem der Bedienmodule 46 oder 48 die Betonausrüstung, unter anderem umfassend Materialförderung, Muldensteuerung, Rüttler, und dergleichen, gesteuert werden, und können mit dem jeweils anderen Bedienmodul 48 oder 46 die Komponenten des Maschinenkinematik, unter anderem umfassend den Fahrantrieb 24, eine Höhenverstellung vermittels der Hubsäulen 14a, eine Lenk-Positionierung der Laufwerke 16 und 18, gesteuert werden. Es können auch Funktionen vorhanden sein, die an jedem der Bedienmodule 46 und 48 steuerbar sind.

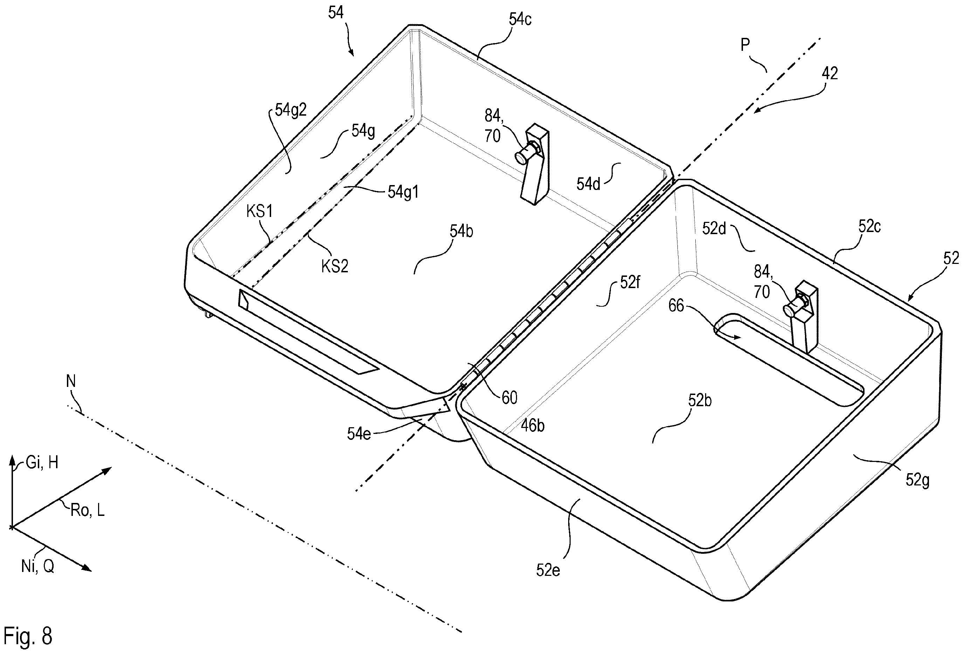

Die Bedienfelder 46b und 48b, auf welche die Bedienelemente montiert sind, sind im Wesentlichen eben und sind im dargestellten Beispiel parallel zum Boden 46c bzw. 48c der Bedienmodule 46 bzw. 48 ausgerichtet (siehe auch Figur 8).

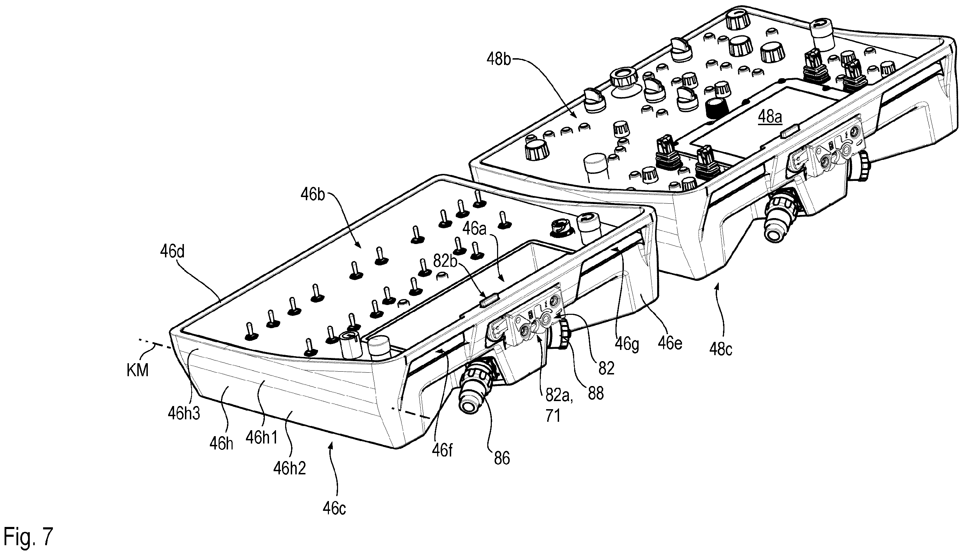

Die Oberschale 52 und die Unterschale 54 sind durch Schalenränder 52c bzw. 54c begrenzt, welche in der Schließstellung der Gehäuse flächig aneinander anliegen. Die Schalenränder 52c und 54c sind jeweils ebene Schalenränder, d. h. sie liegen jeweils in einer Ebene. Bevorzugt sind die Schalenränder 52c und 54c in der Offenstellung ihres Gehäuses 42 oder/und 46 komplanar, wie dies in den Figuren 4 und 7 der Fall ist.

Wie in den Figuren 4 und 7 zu erkennen ist, ist die Ebene der Schalenränder 52c und 54c bezüglich der Ebene der zugehörigen Schalenböden 52b und 54b um eine Neigeachse N geneigt. In dem am Bedienstand 38 betriebsbereit angeordneten Zustand der Gehäuse 42 und 44 verläuft die Neigeachse N bevorzugt parallel zur Nickachse Ni auf jener Seite der Gehäuse 42 und 44, auf welcher sich auch der Arbeitsraum W (siehe Figuren 2 und 3) des Maschinenführers befindet. In der Darstellung der Figuren 4 und 7 ist die Neigeachse N näher beim Gehäuse 42 dargestellt als dies tatsächlich der Fall ist. Eine realistischere Lage der Neigeachse N relativ zu den Gehäusen 42 und 44 zeigt Figur 3.

Somit kragen die vom Maschinenführer weiter entfernt gelegenen längs der Nickachse Ni verlaufenden Seitenwände 52d und 54d der Unterschale 52 bzw. der Oberschale 54 weiter vom jeweiligen Schalenboden 52b bzw. 54b nach oben aus als die ebenfalls längs der Nickachse Ni verlaufenden näher bei Maschinenführer gelegenen Seitenwände 52e und 54e. Dementsprechend überragen die weiter vom Maschinenführer entfernt gelegenen Seitenwände 52d und 54d die Bedienfelder 46b und 48b der in den jeweiligen Schalen 52 und 54 aufgenommenen Bedienmodule 46 bzw. 48 stärker als die näher bei Maschinenführer gelegenen Seitenwände 52e und 54e. So kann für die Bedienfelder 46b und 48b ein gewisser Blendschutz gegenüber vor der Maschine 10 gelegenen Lichtquellen erreicht werden. Außerdem kann so das Gehäuse 42 geschlossen werden, ohne dass von den jeweiligen Bedienfeldern 46a und 48a abstehende Bedienelemente miteinander oder mit dem Bedienfeld des jeweils anderen Bedienmoduls kollidieren.

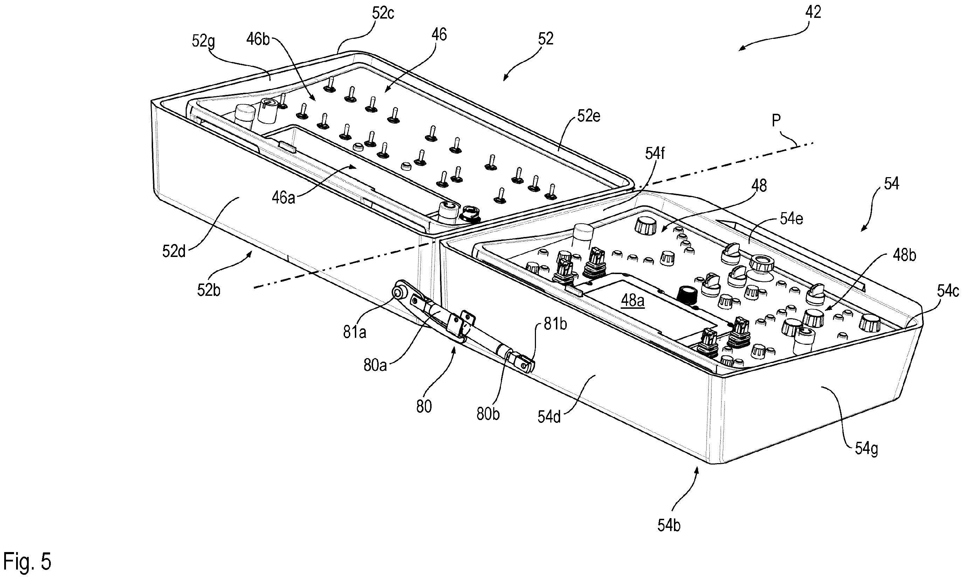

Figur 5 zeigt die gleiche Anordnung wie Figur 4, jedoch von schräg vorne. In Figur 5 ist auf der Außenseite der Seitenwände 52d und 54d ein die beiden Schalen 52 und 54 an seinen Anlenkpunkten 81a und 81b miteinander verbindender Dämpfer 80 dargestellt, welcher die Schwenkgeschwindigkeit der Schwenkbewegung der Schalen 52 und 54 relativ zueinander begrenzt, um zu verhindern, dass die mit dem Bedienmodul 48 bestückte Oberschale 54 mit hoher Geschwindigkeit auf die Auflagepuffer 78 aufschlägt und dort unter hoher Krafteinwirkung extrem verzögert wird. Dadurch kann die Elektronik im Bedienmodul 48 gegen eine unerwünschte Beschädigung durch Stöße beim Öffnen des Gehäuses 42 geschützt werden. Der Dämpfer 80 kann ein an sich bekannter Fluiddämpfer sein, etwa ein Überströmdämpfer, welcher durch Durchströmung von Öffnungen in dem im Inneren seines Zylinders 80a aufgenommenen Kolben durch eine viskose Flüssigkeit eine Relativgeschwindigkeit zwischen dem Zylinder 80a und der aus ihm auskragenden Kolbenstange 80b begrenzt. Strömungswiderstände nehmen nämlich etwa quadratisch mit der Strömungsgeschwindigkeit am Strömungshindernis zu, so dass die vom Dämpfer 80 auf die Gehäuseschalen 52 und 54 ausgeübte Bremswirkung mit zunehmender Schwenk-Relativgeschwindigkeit der beiden Gehäuseschalen 52 und 54 progressiv ansteigt.

Die einander längs der Nickachse Ni gegenüberliegenden Seitenwände 52f und 52g der Unterschale 52 sowie die einander längs der Nickachse Ni gegenüberliegenden Seitenwände 54f und 54g der Oberschale 54 verbinden die Seitenwände 52d und 52e bzw. die Seitenwände 54d und 54e miteinander. Die mit "f" gekennzeichneten Seitenwände sind durch das Scharnier 60 unmittelbar verbunden. In der Schließstellung des Gehäuses 42 schließen mit gleichen Kleinbuchstaben gekennzeichnete Seitenwände der Oberschale und der Unterschale über ihre jeweiligen mit dem Kleinbuchstaben "c" gekennzeichneten Seitenränder hinweg aneinander an.

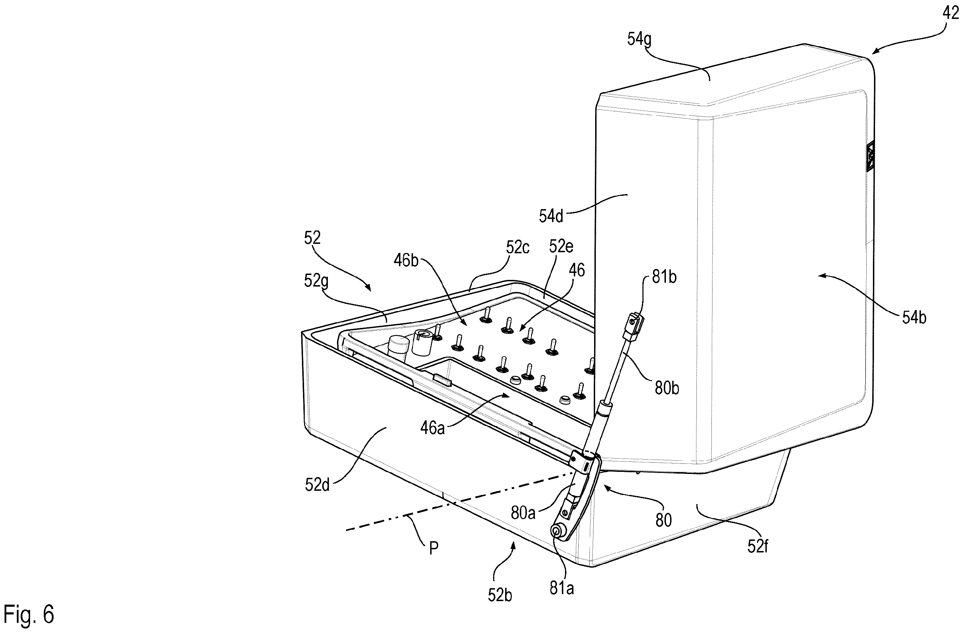

In Figur 6 ist das Gehäuse 42 von Figur 5 in halbgeöffneter Stellung zwischen Öffnung und Schließstellung dargestellt.

In Figur 7 sind die Bedienmodule 46 und 48 ohne das Gehäuse 42 dargestellt. Die Bedienmodule 46 und 48 haben eine im Wesentlichen identische Außengestalt, und im Wesentlichen identische Schnittstellen, weshalb es vorliegend ausreicht, nur eines der Bedienmodule 46 und 48 zu beschreiben, da deren Beschreibung mit Ausnahme der jeweiligen unterschiedlichen Bedienfelder 46b und 48b auch für das jeweils andere Bedienmodul gilt.

Das Bedienmodul 46 weist einen Rand 46d auf, von welchem aus die Außenwände des Bedienmoduls 46, siehe beispielsweise die Außenwände 46e und 46h, zum Boden 46c des Bedienmoduls 46 zu laufen. Die Außenwände des Bedienmoduls 46 umschließen unter dem Bedienfeld 46a angeordnete elektrische Komponenten. Sie schließen unmittelbar an das Bedienfeld 46a an. Der Rand 46d befindet sich im dargestellten Ausführungsbeispiel an dem im Betrieb dem Maschinenführer näher gelegenen Bereich des Bedienmoduls 46 auf derselben Höhe wie das Bedienfeld 46b. An dem im Betrieb dem Maschinenführer ferner gelegenen Bereich des Bedienmoduls 46 ist der Rand 46d mit Abstand vom Bedienfeld 46b über das Bedienfeld 46b auskragend vorgesehen, sodass auf der im Betrieb längs der Rollachse Ro vom Maschinenführer weg weisenden Außenwand 46e des Bedienmoduls 46 Griffausnehmungen 46f und 46g ausgebildet sein können, welche das Einsetzen des Bedienmoduls 46 in eine der Schalen 52 und 54 und die Entnahme des Bedienmoduls 46 aus der jeweiligen Schale erleichtern.

Die Außengestalt des Bedienmoduls 46 verjüngt sich vom Rand 46d zum Boden 46c hin, sodass die Außengestalt des Bedienmoduls 46 eine grob konvexe Außengestalt aufweist, welche in die konkaven Innenseiten 52a und 54a der Schalen 52 bzw. 54 passt. Um eine konvexe Außengestalt bereitstellen zu können, weist beispielsweise die seitliche Außenwand 46h einen gekrümmten Abschnitt 46h1 auf, welcher um eine Krümmungsachse KM gekrümmt ausgebildet ist. Die Fläche des Bodens 46c des Bedienmoduls 46 ist aufgrund der konvexen Außengestalt des Bedienmoduls 46 kleiner als die Fläche des Bedienfelds 46b.

Die seitlichen Außenwandabschnitte 46h2 und 46h3 unter bzw. über dem gekrümmten Abschnitt 46h1 sind im Wesentlichen eben und wegen des zwischen ihnen liegenden gekrümmten Abschnitts 46h1 relativ zueinander um die Krümmungsachse KM geneigt.

An der Außenwand 46e ist ein Verrastungsmechanismus 82 mit einer Rastklauenanordnung 82a als Teil einer Festlegegegenformation 71 angeordnet. Durch eine Drucktaste 82b kann die Rastklauenanordnung 82a in eine Freigabestellung verbracht werden, in welchem sie einen in Figur 8 dargestellten Rastzapfen 84 als Teil der Festlegeformation 70 freigibt. Die Rastklauenanordnung 82a ist, beispielsweise durch eine Über-Totpunkt-Kinematik so eingestellt, dass sie bei Einführung des Rastzapfens 84 in die Rastklauenanordnung 82a durch den Rastzapfen 84 in eine den Rastzapfen 84 umgreifende Formschlusseingriffsstellung verlagert wird und dort bis zur Betätigung der Drucktaste 82b verbleibt. Alternativ oder zusätzlich zur oben beschriebenen Verbindungsschnittstelle 68 kann so das Bedienmodul 46 durch den Verrastungsmechanismus 82 und den Rastzapfen 84 mechanisch durch Formschlusseingriff gesichert in einer Schale aus Unterschale 52 und Oberschale 54 angeordnet sein.

Der Rastzapfen 84 steht beispielhaft von jeder der Seitenwände 52d und 54d zur jeweils gegenüberliegenden Seitenwand 52e bzw. 54e hin ab. Durch diese asymmetrische Anordnung kann ein Bedienmodul nur in genau einer Relativstellung in einer der Schalen 52 und 54 angeordnet werden.

Auch die Seitenwände der Gehäuseschalen 52 und 54 sind zur Bereitstellung einer konkaven Innenseite geneigt und schließen mit dem Boden 52b bzw. 54b einen Winkel von mehr als 90° ein.

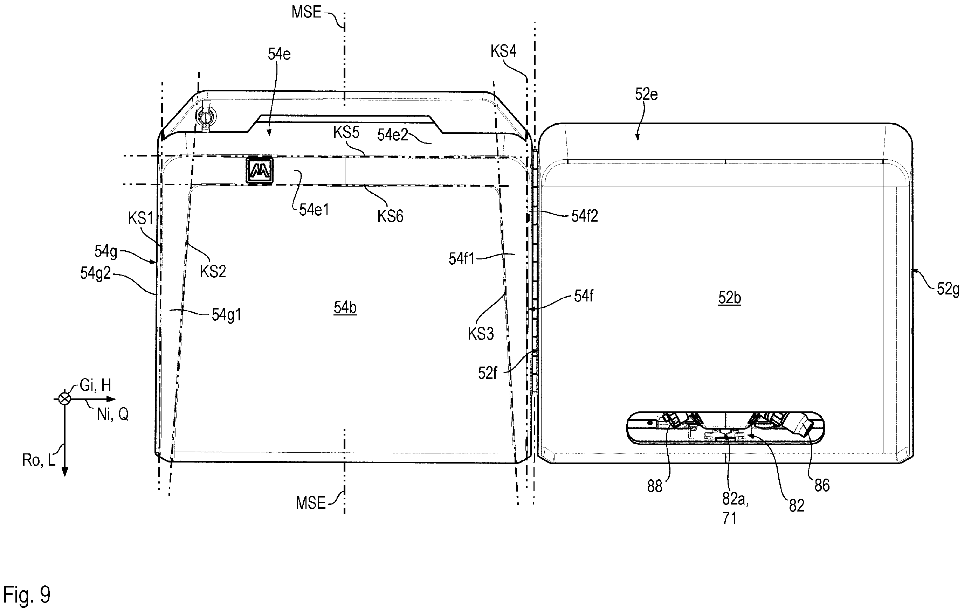

Die Figuren 8 und 9 zeigen Knickachsen KS1 bis KS6, um welche beiderseits einer jeweiligen Knickachse gelegene benachbarte Abschnitte der Seitenwände der Oberschale 54 relativ zueinander abgewinkelt sind. Die längs der Seitenwände 54f und 54g verlaufenden Knickachsen KS1, KS2, KS5 und KS6 sind bezüglich einer zur Zeichenebene der Figur 9 orthogonalen mittelsenkrechten Ebene MSE auf den Schalenboden 54b spiegelsymmetrisch ausgebildet und sind zueinander geneigt. Dies ist jedoch nur ein Ausführungsbeispiel. Die zur Seitenwand 54e gehörenden Knickachsen KSM3 und KSM4 sind dagegen zueinander sowie im betriebsbereiten Zustand zur Nickachse Ni parallel. Die näher beim Schalenboden 54b gelegenen Seitenwandabschnitte 54e1, 54f1 und 54g1 sind gegenüber dem Schalenboden 54b weniger stark geneigt als die weiter entfernt gelegenen Seitenwandabschnitte 54e2, 54f2 und 54g2 der jeweils selben Seitenwände 54e, 54f bzw. 54g.

Die Seitenwände 52e, 52f und 52g der Unterschale 52 sind im Bereich nahe des Schalenbodens 52b der Unterschale 52 abweichend von den korrespondierenden Seitenwänden der Oberschale 54 ausgebildet. Jedoch weisen die Seitenwände 52e, 52f und 52g relativ zum Schalenboden 52b der Unterschale 52 denselben Neigungswinkel auf wie die Seitenrandabschnitte 54e1, 54f1 bzw. 54g1 der korrespondierenden Seitenwände der Oberschale 54. Für die in den Figuren 8 und 9 nicht dargestellten Seitenwände 52d und 54d gilt das Entsprechende. Hierdurch ist sichergestellt, dass Abschnitte der Außenwände der Bedienmodule 46 bzw. 48 an inneren Abschnitten der Seitenwände 52d, 52e, 52f und 52g sowie 54d, 54e, 54f und 54g mit geringem Spaltmaß oder bevorzugt spielfrei anliegen.

Wie Figur 7 gezeigt ist, können die Bedienmodule 46 und 48 zusätzlich oder alternativ zu der Gegenschnittstelle, welche mit der inneren elektrischen Verbindungsschnittstelle 68 koppelt, eine Kopplungsformation 86 aufweisen, welche mit einem Stecker 72a einer bordeigenen Verbindungsleitung 72 koppelbar ist, um das gekoppelte Bedienmodul mit elektrischer Energie zu versorgen und um eine Signalübertragung mit der bordeigenen Datenverarbeitungsanlage 64 zu gewährleisten. Die Kopplungsformation 86 ist zur Schnellkupplung mit dem Stecker 72a an der bordeigenen Verbindungsleitung 72 ausgebildet. Der Stecker 72a kann durch einen Bajonettverschluss oder eine Überwurfmutter formschlüssig an der Kopplungsformation 86 gesichert sein.

Weiter weisen die Bedienmodule eine Weiterleitungsschnittstelle 88 auf, über welche ein weiteres Bedienmodul über ein Verbindungskabel 62, wie es in Figur 2 gezeigt ist, mit einem unmittelbar an die bordeigene Verbindungsleitung 72 angeschlossenen Bedienmodul zur Versorgung mit elektrischer Energie und zur Signalübertragung verbunden werden kann. Das Verbindungskabel 62 kann mit einem Ende an die Weiterleitungsschnittstelle 88 des einen Bedienmoduls und mit dem anderen Ende an die Kopplungsformation 86 des anderen Bedienmoduls angeschlossen sein. Auch die Weiterleitungsschnittstelle 88 ist eine Schnellkupplungsschnittstelle mit beispielsweise Bajonett- oder Überwurfmutter-Sicherung einer einmal hergestellten elektrischen Verbindung.

## Patentansprüche

1. Selbstfahrende Bodenbearbeitungsmaschine (10), umfassend einen Maschinenrahmen (12), ein den Maschinenrahmen (12) tragendes Fahrwerk (14), einen Fahrantrieb (24) und eine zur Bodenbearbeitung ausgebildete Bodenbearbeitungsvorrichtung (28), wobei die Bodenbearbeitungsmaschine (10) eine Steuervorrichtung (40) zur Steuerung eines Betriebs der Bodenbearbeitungsmaschine (10) aufweist, wobei die Steuervorrichtung (40) ein Bedienmodul (46, 48) mit einer Mehrzahl von selektiv betätigbaren Bedienelementen (49a, 49b, 49c) aufweist, deren Betätigung geeignet ist, einen Betriebszustand der Bodenbearbeitungsmaschine (10) zu ändern, wobei die Steuervorrichtung (40) ein wenigstens zweiteiliges Gehäuse (42, 44) aufweist, in welchem das Bedienmodul (46, 48) aufgenommen ist, wobei das Gehäuse (42, 44) eine Unterschale (52) und eine Oberschale (54) aufweist, welche relativ zueinander zwischen einer Schließstellung und einer Offenstellung bewegbar sind, wobei die Bedienelemente (49a, 49b, 49c) des im Gehäuse aufgenommenen Bedienmoduls (46, 48) in der Offenstellung des Gehäuses (42, 44) zugänglich sind,
**dadurch gekennzeichnet, dass** das Bedienmodul (46, 48) vom Gehäuse (42, 44) trennbar und am Gehäuse (42, 44) anordenbar ist, wobei das Bedienmodul (46, 48) an jeder Schale (52, 54) aus Oberschale (54) und Unterschale (52) funktionsbereit anordenbar ist.

2. Selbstfahrende Bodenbearbeitungsmaschine (10) nach Anspruch 1,
**dadurch gekennzeichnet, dass** jede Schale (52, 54) aus Oberschale (54) und Unterschale (52) je eine zur Aufnahme des Bedienmoduls (46, 48) ausgebildete konkave Innenseite (52a, 54a) aufweist, wobei die Innenseiten (52a, 54a) von Oberschale (54) und Unterschale (52) in der Schließstellung des Gehäuses (42, 44) aufeinander zuweisen und wobei die Innenseiten (52a, 54a) von Oberschale (54) und Unterschale (52) jeweils zur Aufnahme des Bedienmoduls (46, 48) ausgebildet sind.

3. Selbstfahrende Bodenbearbeitungsmaschine (10) nach Anspruch 1 oder 2,
**dadurch gekennzeichnet, dass** die Oberschale (54) und die Unterschale (52) um eine Schwenkachse (P) relativ zu einander verschwenkbar sind.

4. Selbstfahrende Bodenbearbeitungsmaschine (10) nach einem der vorhergehenden Ansprüche,
**dadurch gekennzeichnet, dass** die Unterschale (52) bestimmungsgemäß lösbar oder dauerhaft mit einem Trägerbauteil (50) verbunden ist, wobei das Trägerbauteil (50) mit dem Maschinenrahmen (12) verbunden ist.

5. Selbstfahrende Bodenbearbeitungsmaschine (10) nach einem der vorhergehenden Ansprüche,
**dadurch gekennzeichnet, dass** wenigstens eine Schale (52, 54) aus Oberschale (54) und Unterschale (52) eine Öffnung (66) aufweist, durch welche im betriebsbereiten Zustand eine elektrische Verbindungsleitung (62, 72) zu dem Bedienmodul (46,48) hindurchgeführt ist.

6. Selbstfahrende Bodenbearbeitungsmaschine (10) nach einem der vorhergehenden Ansprüche,
**dadurch gekennzeichnet, dass** wenigstens eine Schale (52, 54) aus Oberschale (54) und Unterschale (52) auf ihrer Außenseite eine äußere elektrische Verbindungsschnittstelle zur elektrischen Verbindung mit wenigstens einer Bordleitung der Bodenbearbeitungsmaschine (10) aufweist und auf ihrer Innenseite (52a, 54a) eine mit der äußeren elektrischen Verbindungsschnittstelle elektrisch leitend verbundene innere elektrische Verbindungsschnittstelle (68) zur elektrischen Verbindung mit dem Bedienmodul (46, 48) aufweist.

7. Selbstfahrende Bodenbearbeitungsmaschine (10) nach einem der vorhergehenden Ansprüche,
**dadurch gekennzeichnet, dass** jede Schale (52, 54) aus Oberschale (54) und Unterschale (52) eine Festlegeformation (70) aufweist und dass das Bedienelement eine Festlegegegenformation (71) aufweist, wobei die Festlegeformation (70) und die Festlegegegenformation (71) zur Sicherung des Bedienmoduls (46, 48) an einer Schale (52, 54) aus Oberschale (54) und Unterschale (52) in einen bestimmungsgemäß lösbaren Formschlusseingriff bringbar sind.

8. Selbstfahrende Bodenbearbeitungsmaschine (10) nach den Ansprüchen 6 und 7,
**dadurch gekennzeichnet, dass** wenigstens eine Schale (52, 54) aus Oberschale (54) und Unterschale (52) einerseits und das Bedienmodul (46, 48) andererseits derart aufeinander abgestimmt sind, dass bei Herstellung des lösbaren Formschlusseingriffs zwischen der Festlegeformation (70) der jeweiligen Schale (52, 54) und der Festlegegegenformation (71) des Bedienmoduls (46, 48) automatisch eine elektrisch leitende Verbindung zwischen der inneren elektrischen Verbindungsschnittstelle (68) der jeweiligen Schale und der Gegenschnittstelle des Bedienmoduls (46, 48) hergestellt wird.

9. Selbstfahrende Bodenbearbeitungsmaschine (10) nach einem der vorhergehenden Ansprüche, unter Einbeziehung wenigstens eines der Ansprüche 5 oder 6,
**dadurch gekennzeichnet, dass** die Steuervorrichtung (40) der Bodenbearbeitungsmaschine (10) eine außerhalb des Bedienmoduls (46, 48) angeordnete, vom Maschinenrahmen (12) getragene Datenverarbeitungsanlage (64) aufweist, mit welcher das Bedienmodul (46, 48) zur Übertragung von Signalen verbindbar ist.

10. Selbstfahrende Bodenbearbeitungsmaschine (10) nach einem der vorhergehenden Ansprüche,
**dadurch gekennzeichnet, dass** das Bedienmodul (46, 48) wenigstens eine Ausgabevorrichtung (46a, 48a) zur Ausgabe von Signalen oder/und Daten aufweist.

11. Selbstfahrende Bodenbearbeitungsmaschine (10) nach einem der vorhergehenden Ansprüche,
**dadurch gekennzeichnet, dass** das Bedienmodul (46, 48) ein erstes Bedienmodul (46) ist, wobei die Steuervorrichtung (40) ein zweites Bedienmodul (48) aufweist, wobei jedes Bedienmodul (46, 48) aus erstem und zweitem Bedienmodul (46, 48) in jeder Schale (52, 54) aus Oberschale (54) und Unterschale (52) funktionsbereit anordenbar ist.

12. Selbstfahrende Bodenbearbeitungsmaschine (10) nach einem der vorhergehenden Ansprüche,
**dadurch gekennzeichnet, dass** das Gehäuse (42, 44) zusätzlich zur Oberschale (54) eine zweite Oberschale oder/und zusätzlich zur Unterschale (52) eine zweite Unterschale aufweist.

13. Selbstfahrende Bodenbearbeitungsmaschine (10) nach Anspruch 12,
**dadurch gekennzeichnet, dass** das Gehäuse (42, 44) zusätzlich zur Oberschale (54) eine zweite Oberschale aufweist, wobei die zweite Oberschale und die Unterschale (52) um eine zweite Schwenkachse relativ zu einander verschwenkbar sind.

14. Selbstfahrende Bodenbearbeitungsmaschine (10) nach Anspruch 12,
**dadurch gekennzeichnet, dass** das Gehäuse (42; 44) bezüglich einer Symmetrieebene (MSE) spiegelsymmetrisch ausgebildet ist.

15. Selbstfahrende Bodenbearbeitungsmaschine (10) nach einem der vorhergehenden Ansprüche,
**dadurch gekennzeichnet, dass** die Bodenbearbeitungsmaschine (10) ein Gleitschalungsfertiger ist.
